# FASCICULE DE BREVET EUROPEEN

(11) **EP 2 078 109 B1**
(45) Date de publication et mention de la délivrance du brevet: **10.04.2013**
(21) Numéro de dépôt: 07825311.9
(22) Date de dépôt: 03.10.2007
(51) Int. Cl.: D21H 17/69, C09C 3/10

(54) **UTILISATION D'UNE SUSPENSION ET/OU D'UNE DISPERSION AQUEUSE DE MATIERES MINERALES CONTENANT UN COPOLYMERE HYDROSOLUBLE A GROUPEMENT HYDROPHOBE DANS LA FABRICATION D'UNE FEUILLE DE PAPIER**
Verwendung einer Suspension oder wässrigen Dispersion von mineralischen Materialien umfassend ein wasserlösliches Copolymer mit hydrophoben Gruppen zur Herstellung von Papierblättern
USE OF AN AQUEOUS SUSPENSION AND/OR DISPERSION OF MINERAL MATERIALS CONTAINING A HYDROPHOBIC GROUP WATER-SOLUBLE COPOLYMER FOR MAKING A PAPER SHEET

(30) Priorité: 12.10.2006 FR 0608927
(43) Date de publication de la demande: 15.07.2009
(73) Titulaire: COATEX S.A.S., 69730 Genay (FR)
(72) Inventeur: MONGOIN, Jacques, 69650 Quincieux (FR); DUPONT, François, 69004 Lyon (FR); PARANT, Hubert, 77780 Bourron-Marlotte (FR); SUAU, Jean-Marc, 69480 Lucenay (FR)
(86) Numéro de dépôt international: PCT/IB2007/002997
(87) Numéro de publication internationale: WO 2008/044118

(56) Documents cités:
- EP-A- 0 892 111
- EP-A1- 0 892 020

## Description

La présente invention concerne le secteur technique des suspensions aqueuses de matières minérales entrant dans la fabrication de la feuille de papier.

Dans le cadre de la fabrication d'une feuille de papier couchée, une première étape consiste en la transformation de la pâte à papier, par l'intermédiaire de la machine à papier, en une feuille de papier, non encore couchée. La pâte à papier contient essentiellement des fibres naturelles de cellulose ou des fibres synthétiques, de l'eau, et une ou plusieurs matières minérales tel que le carbonate de calcium, ainsi que divers autres additifs tel que des agents dits de "collage". On parle alors de l'utilisation d'une matière minérale (tel que le carbonate de calcium) en "charge de masse". La deuxième étape réside dans le couchage de la feuille précédemment obtenue. Cette opération consiste à déposer sur la surface du papier support une composition aqueuse dénommée "sauce de couchage" qui contient notamment de l'eau, une ou plusieurs matières minérales tel que le carbonate de calcium, un ou plusieurs liants ainsi que divers additifs. Dans le cas de la fabrication de la sauce de couchage, on parle de l'utilisation d'une matière minérale (tel que le carbonate de calcium) en pigments de couchage.

Après dépôt sur le support, la sauce de couchage possède une tendance naturelle à transférer dans le support, tout ou partie de l'eau et des substances hydrosolubles ou en suspension qu'elle contient. On cherche alors à ralentir cette migration dans le papier support, en vue de maintenir une répartition homogène des substances hydrosolubles ou en suspension dans l'épaisseur de la sauce de couchage ainsi déposée, ce qui améliore au final l'état de surface et l'imprimabilité du papier.

Or, cherchant à résoudre le problème technique particulier du ralentissement de la pénétration de sauce de couchage à l'intérieur d'une feuille de papier, sans pour autant l'empêcher, l'objectif étant de maintenir une répartition homogène des substances hydrosolubles ou en suspension dans l'épaisseur de la sauce de couchage ainsi déposée, l'homme du métier a identifié deux technologies possibles :
- la première consiste à modifier la rhéologie de la sauce de couchage par l'ajout dans ladite sauce d'agents modificateurs de rhéologie dits "épaississants" qui, par une augmentation de la viscosité de la sauce de couchage en réduisent la pénétration à l'intérieur de la feuille de papier. On parle alors de la "rétention d'eau" de la sauce de couchage. Le problème de cette technologie est que toute modification importante de la rhéologie de la sauce de couchage peut avoir des effets négatifs sur d'autres paramètres du processus (pompage, filtration, étalement de la sauce de couchage),
- la deuxième consiste à modifier les propriétés d'absorption du papier support soit par une réduction de sa porosité soit par une augmentation de son degré d'hydrophobicité.

Il existe un certain nombre de documents se rapportant au problème d'augmenter au maximum le degré d'hydrophobicité d'une feuille de papier vis-à-vis de l'eau (comme on peut le souhaiter dans le cas de papiers qui doivent résister à des conditions d'hygrométrie particulièrement importante) ou vis-à-vis de l'encre (comme on peut le rechercher, notamment dans le cas de papiers destinés à recevoir des encres aqueuses et particulièrement acides). Ces documents sont donc focalisés sur la pénétration de liquides telles que de l'eau ou des encres dont la formulation diffère de celle d'une sauce de couchage. De plus, ils s'appuient en général sur des tests extrêmement simples, qui résident dans la mesure du temps de passage de l'eau ou d'une encre à travers une feuille de papier. De tels tests seraient complètement inadaptés pour mettre en évidence le problème technique objet de la présente Demande :
- d'une part, dans ces tests, le liquide (eau ou encre) traverse complètement la feuille de papier, ce qui n'est pas le cas d'une sauce de couchage qui ne pénètre que partiellement le support papier au moment de son application sur celui-ci ;
- d'autre part, ces tests ne permettent pas de rendre compte de manière dynamique, de la vitesse de pénétration de la sauce de couchage au sein de la feuille de papier et ce, pendant les premiers dixièmes de seconde suivants la mise en contact de ladite sauce avec le papier support.

Comme explicité plus avant, seule la technique mise en oeuvre dans les essais de la présente Demande permet d'appréhender les phénomènes décrits ci-dessus.

Par conséquent, les documents se rapportant au problème d'augmenter au maximum le degré d'hydrophobicité d'une feuille de papier vis-à-vis de l'eau ou d'une encre résolvent donc des problèmes techniques très différents de celui qui constitue l'objet de la présente Demande. Si la Demanderesse mentionne néanmoins ces documents, c'est justement pour démontrer que l'homme du métier, même s'il avait choisi de se référer à cesdits documents (qu'aucun élément objectif ne devrait l'amener à considérer, puisque lesdits documents ne traitent pas du problème technique qu'il souhaite résoudre), n'aurait trouvé aucune information lui révélant ou lui suggérant la solution technique objet de la présente Demande.

Ainsi, en vue d'augmenter le degré d'hydrophobicité d'une feuille de papier vis-à-vis de l'eau ou d'une encre notamment, l'homme du métier connaît un certain nombre de solutions, qui peuvent être classées en 3 catégories lors de la mise en oeuvre, dans la fabrication de la feuille de papier :
- d'un additif particulier, ayant des propriétés de limitation de la pénétration de l'eau dans ladite feuille,
- d'agents de collage conférant aux fibres de cellulose du papier support, naturellement hydrophiles, des propriétés hydrophobes, améliorant leur résistance à l'eau,
- de matières minérales tel que le carbonate de calcium, lesdites matières étant traitées, dispersées ou encore mélangées avec un polymère organique particulier, lesdites matières ainsi traitées, dispersées ou mélangées avec ledit polymère conférant à la feuille de papier des propriétés de résistance à la pénétration de l'eau.

Dans la première catégorie, l'homme du métier connaît le document JP 06-219033, qui décrit un papier contenant de la pulpe, une matière minérale tel que le carbonate de calcium, ainsi qu'un agent "inhibiteur de pénétration" de l'encre et donc des substances hydrosolubles. Un tel agent est notamment choisi parmi les résines hydrophiles tels que la caséine et l'amidon, mais aussi parmi des copolymères ayant à la fois une partie hydrophile et une partie hydrophobe tels que des copolymères de l'anhydride maléique et du styrène.

Il connaît aussi dans cette catégorie le document SU 1 263 739, qui décrit la mise en oeuvre d'un agent hydrophobant de la feuille de papier telle une cire, en association avec une suspension de matière minérale (tel que le carbonate de calcium) et de pâte à papier, dans un procédé de fabrication d'une feuille de papier.

La seconde catégorie est constituée par les solutions qui mettent en oeuvre des agents de collage de nature hydrophobe.

Comme rappelé dans le document WO 96 / 23105, les agents de collage classiques du type résines avec des sulfates d'alumine ou encore ceux basés sur des cétènes dimères, présentent des propriétés hydrophobantes qui vont limiter la pénétration de l'eau et des substances hydrosolubles dans le papier au sein duquel lesdits agents de collage sont utilisés. Ce document enseigne même la combinaison de l'utilisation de ces agents de collage avec un polymère colloïdal, en vue d'améliorer l'hydrophobicité de la feuille de papier.

Enfin, la troisième catégorie de solutions repose sur la mise en oeuvre d'une matière minérale tel que le carbonate de calcium, ladite matière étant traitée ou mélangée avec un polymère organique.

Dans cette catégorie, l'homme du métier connaît le document US 5 514 212, qui décrit le traitement de la surface d'un carbonate de calcium, par précipitation en présence d'un complexe formé d'amidon et d'acides gras ayant de 16 à 18 atomes de carbone. Un carbonate de calcium ainsi modifié, est utilisé sous forme de suspension aqueuse dans la fabrication d'une feuille de papier. Ce document indique qu'on peut ainsi réduire la quantité d'agents de collage mis en oeuvre dans la fabrication d'une feuille de papier. Il mentionne également qu'on améliore ainsi le degré d'hydrophobicité de la feuille de papier. Ce niveau d'hydrophobicité est déterminé par des mesures de pénétration d'encre aqueuse acide : il s'agit d'un test bien connu de l'homme du métier, sous l'expression " Hercules Sizing Test" ou test "HST", consistant en la détermination du temps mis pour une encre aqueuse normalisée contenant de l'acide formique à traverser une feuille de papier. L'objectif de ce test est donc de caractériser la résistance d'un papier aux encres aqueuses et acides, encres avec lesquelles ledit papier est destiné à être imprimé par la suite. De plus, les exemples de ce document concernent uniquement des feuilles de papier non couchées. Par conséquent, il n'existe aucune information dans le document US 5 514 212, révélant ou suggérant que l'utilisation de carbonates de calcium traités selon la méthode décrite dans ce document, ralentit la pénétration d'une sauce de couchage papetière à l'intérieur de la feuille de papier et conduise à une répartition homogène des substances hydrosolubles ou en suspension dans l'épaisseur de la sauce de couchage déposée sur le papier.

L'homme du métier connaît aussi le document WO 01 / 86067, qui décrit une méthode pour traiter une matière minérale tel que le carbonate de calcium, au moyen d'un polymère hydrophobe à base d'acrylates, d'acrylonitrile et de styrène, polymérisés en présence d'amidon, de polysaccharide ou de carboxyméthylcellulose. Ledit polymère est mélangé avec ladite matière minérale sous forme de suspension ou de solution aqueuse, cette dernière servant ultérieurement à la fabrication d'une feuille de papier, dont on améliore ainsi le degré d'hydrophobicité. Comme pour le document précédent, les exemples ne concernent pas des feuilles de papier couchées. D'autre part, ces exemples consistent en des tests rudimentaires du type "HST".

Enfin, l'homme du métier connaît aussi le document WO 00 / 03093 qui décrit un procédé de fabrication de feuille de papier, mettant en oeuvre une matière minérale tel que le carbonate de calcium, sous forme d'une suspension aqueuse contenant aussi un copolymère de l'acrylonitrile avec un autre monomère tel que le styrène, ce copolymère apportant une fonction hydrophobante au carbonate de calcium. Dans ce document, il est indiqué que le carbonate de calcium et le copolymère sont mélangés dans l'eau. Le carbonate de calcium ainsi utilisé dans la fabrication de la feuille de papier, apporte à ladite feuille une hydrophobicité améliorée. Comme pour les 2 documents précédents, les exemples consistent en de simples mesures de pénétration d'encres par l'intermédiaire du test "HST". De plus, les feuilles de papier ne sont pas couchées.

Par conséquent, aucun de ces documents ne révèle ni ne suggère de mettre en oeuvre, dans un procédé de fabrication d'une feuille de papier, comme agent ralentissant la pénétration d'une sauce de couchage à l'intérieur de ladite feuille, une dispersion et / ou une suspension aqueuse de matières minérales, caractérisée en ce qu'elle contient au moins un copolymère hydrosoluble constitué :
a) d'au moins un monomère anionique à insaturation éthylénique,
b) et d'au moins un monomère oxyalkylé à insaturation éthylénique et terminé par une chaîne hydrophobe.

Un des mérites de la Demanderesse repose notamment sur le fait qu'elle a su remarquer que des matières minérales,
- en dispersion et / ou en suspension aqueuse d'une part,
- et en association avec un copolymère particulier d'autre part,
convenaient tout particulièrement à la résolution du problème technique objet de la présente Demande.

Sans vouloir être liée à une quelconque théorie, la Demanderesse pense que la matière minérale, notamment lorsqu'elle est broyée et / ou dispersée avec ledit copolymère, puis lorsqu'elle est mise en oeuvre dans la fabrication de la feuille de papier, va développer des propriétés de ralentissement de la pénétration d'une sauce de couchage au sein de ladite feuille : cette propriété est notamment illustrée dans les essais de la présente Demande, au moyen d'une technique originale de suivi par ultrasons de la pénétration de la sauce de couchage au sein de la feuille et ce, pendant les premiers dixièmes de seconde suivant la mise en contact de la sauce avec le papier support. On démontre ainsi que, de manière tout à fait avantageuse, la présente invention conduit au ralentissement de la pénétration de la sauce de couchage au sein de la feuille de papier, ce qui se traduit par une répartition homogène des substances hydrosolubles ou en suspension dans l'épaisseur de la sauce de couchage déposée sur le papier.

La Demanderesse souhaite indiquer qu'elle connaît cependant un certain nombre de documents concernant des suspensions aqueuses de matières minérales, traitées, dispersées ou broyées, notamment avec des polymères hydrosolubles comportant un groupement hydrophobe, et utilisées en charge de masse c'est-à-dire dans la fabrication de la feuille de papier. En indiquant de tels documents, elle entend souligner qu'ils ne concernent en rien le problème technique abordé dans la présente Demande : à ce titre, l'homme du métier ne pouvait y trouver aucun enseignement objectif le conduisant à la solution technique qui est l'objet de la présente Demande.

Ainsi, dans le domaine des matières minérales utilisées en charge de masse, lesdites matières étant traitées, l'homme du métier connaît le document JP 2003-166195. Ce document décrit le traitement d'une matière minérale utilisée en suspension aqueuse dans la fabrication du papier, par un composé organique mélangé avec ladite matière minérale. Ce composé organique possède à la fois une partie hydrophile et une partie hydrophobe, ladite partie hydrophobe étant constituée d'un groupement alkyle ou alkényle ayant de 6 à 24 atomes de carbone. L'emploi d'une suspension aqueuse de matières minérales ainsi traitées dans la fabrication du papier, conduit à une augmentation de l'épaisseur de la feuille de papier, ce qui est un problème très différent de celui résolu par la présente invention.

Dans le domaine des matières minérales dispersées en milieux aqueux et utilisées en charge de masse, l'homme du métier connaît le document US 4 801 354. Ce document décrit l'utilisation, comme agent dispersant de matières minérales, d'un copolymère ayant une "valeur Fikentscher K" de 10 à 65 et constitué d'un ester (méth)acrylique et d'un acide carboxylique éthyléniquement insaturé, tel que préférentiellement l'isobutylacrylate dont la solubilité dans l'eau est très faible (0,2 g dans 100 g d'eau).

Les suspensions aqueuses de matières minérales ainsi dispersées (tel que le carbonate de calcium) sont utilisées dans la fabrication de la feuille de papier où elles permettent de limiter la quantité d'agent de rétention des charges minérales, ce que ne cherche pas à résoudre la présente invention.

Enfin, dans le domaine des matières minérales dispersées ou broyées en milieux aqueux, l'homme du métier connaît le document EP 0 892 020. Ce document décrit l'utilisation d'un copolymère comme agent dispersant et / ou d'aide au broyage de matières minérales en suspension aqueuse, caractérisée en ce que ledit copolymère est un copolymère ayant une viscosité spécifique au plus égale à 50 et constitué d'au moins un monomère à insaturation éthylénique et à fonction carboxylique et d'au moins un monomère oxyalkylé à insaturation éthylénique et terminé par une chaîne hydrophobe.

Le problème technique résolu par ce document est la recherche d'un polymère pouvant être utilisé à la fois comme agent dispersant et / ou de broyage de matières minérales, que celles-ci soit hydrophiles comme le carbonate de calcium ou hydrophobes comme le talc. S'il est indiqué dans le document EP 0 892 020 que les matières minérales ainsi obtenues peuvent être utilisées comme charge de masse, il n'existe aucun exemple concernant un tel usage. A fortiori, il n'existe aucune information dans ce document révélant ou suggérant l'usage de matières minérales broyées en suspension aqueuse, et utilisées en charge de masse avec la fonction particulière de ralentir la pénétration d'une sauce de couchage dans la feuille de papier.

Les documents EP 0 892 020 A1 et EP 0 892 111 décrivent la mise en oeuvre de certains polymères, disposant d'un monomère hydrophobe de formule (I) qui diffère de la formule (I) de la présente invention en ce sens que le monomère hydrophobe qu'elle représente est terminé par le tristyryle phényle, seul monomère exemplifié dans D1 et D2. On rappelle que le tristyryle phényle, ou TSP, possède 28 atomes de carbone. D'autre part, ni D1 ni D2 ne concerne le problème de la pénétration d'une sauce de couchage, au sein d'une feuille de papier.

Aussi, un premier objet de l'invention est l'utilisation, dans un procédé de fabrication d'une feuille de papier, comme agent ralentissant la pénétration d'une sauce de couchage à l'intérieur de ladite feuille, d'une dispersion et / ou d'une suspension aqueuse de matières minérales, caractérisée en ce qu'elle contient au moins un copolymère hydrosoluble constitué :
a) d'au moins un monomère anionique à insaturation éthylénique,
b) et d'au moins un monomère oxyalkylé à insaturation éthylénique et terminé par une chaîne hydrophobe.

Cette utilisation est aussi caractérisée en ce que ledit copolymère hydrosoluble est mis en oeuvre pendant au moins une étape de broyage et / ou de dispersion en milieu aqueux desdites matières minérales.

Bien évidemment, l'homme du métier pourra mettre en oeuvre, en combinaison avec ledit copolymère, un autre agent d'aide au broyage et / ou un autre agent de dispersion desdites matières minérales, tels que bien connus de lui.

Cette utilisation est aussi caractérisée en ce que ledit copolymère hydrosoluble est constitué :
a) d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) et d'au moins un monomère oxyalkylé à insaturation éthylénique et terminé par une chaîne hydrophobe, de formule générale (I) : 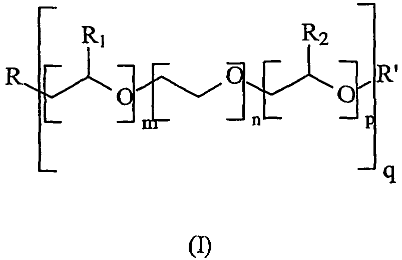 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe.

Cette utilisation est aussi caractérisée en ce que le radical R' est choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, et en ce que le radical R' est de manière extrêmement préférentielle choisi parmi le 2-hexyl 1-decanyle et le 2-octyl 1-dodecanyle ou leurs mélanges.

La présente invention ne saurait être limitée, pour le choix du copolymère précédemment décrit, à la seule présence des 2 monomères a) et b), même si ces 2 monomères restent essentiels dans la composition dudit copolymère. A ce titre, l'utilisation selon la présente invention est aussi caractérisée en ce que outre au moins un monomère a) et au moins un monomère b), ledit copolymère contient aussi au moins un autre monomère, choisi parmi un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore parmi un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou bien parmi un monomère cationique ou ammonium quaternaire tels que préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou bien encore parmi un monomère organofluoré ou organosililé, ou bien parmi les monomères réticulants (monomères ayant au moins deux insaturations éthyléniques) tels que bien connus de l'homme du métier, ou bien des mélanges de ces monomères.

L'utilisation selon l'invention est aussi caractérisée en ce que ledit copolymère hydrosoluble est constitué, exprimé en pourcentage en poids de chacun des constituants:
a) de 5 % à 95 %, préférentiellement de 50 % à 95 %, très préférentiellement de 70 % à 95 % d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) de 5 % à 95 %, préférentiellement de 5 % à 50 %, très préférentiellement de 5 % à 30 % d'au moins un monomère oxyalkylé à insaturation éthylénique et terminé par une chaîne hydrophobe, de formule générale (I) : 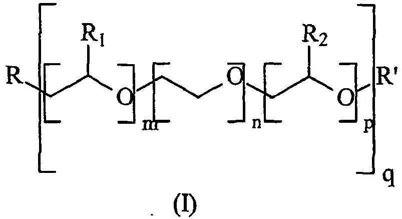 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe, choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, R' étant de manière extrêmement préférentielle choisi parmi le 2-hexyl 1-decanyle et le 2-octyl 1-dodecanyle ou leurs mélanges.

Cette utilisation est aussi caractérisée en ce que ledit copolymère hydrosoluble est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère hydrosoluble obtenu sous forme acide et éventuellement distillé, peut également être partiellement ou totalement neutralisé par un ou plusieurs agents de neutralisation disposant d'une fonction monovalente ou d'une fonction polyvalente, choisis dans le groupe constitué par les cations alcalins, et préférentiellement parmi le sodium, le potassium, l'ammonium ou choisis dans le groupe constitué des amines primaires, secondaires ou tertiaires aliphatiques et/ou cycliques et préférentiellement parmi la stéarylamine, les éthanolamines (mono-, di-, triéthanolamine), la mono et diéthylamine, la cyclohexylamine, la méthylcyclohexylamine ou choisis dans le groupe constitué par les cations divalents alcalino-terreux, et préférentiellement parmi le magnésium, le calcium, le zinc, ou choisis dans le groupe constitué par les cations trivalents, et est préférentiellement l'aluminium.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent d'aide au broyage de matières minérales en suspension aqueuse.

Cette utilisation est aussi caractérisée en ce qu'elle met en oeuvre une quantité dudit copolymère hydrosoluble comprise entre 0,1 % et 3 %, préférentiellement de 0,2 % à 1,5 %, très préférentiellement de 0,3 % à 1 % en poids sec par rapport au poids sec total de matières minérales.

Cette utilisation est aussi caractérisée en ce que la dispersion et / ou la suspension aqueuse de matières minérales contient au moins 10 %, préférentiellement au moins 20 %, très préférentiellement au moins 50 % et de manière extrêmement préférentielle au moins 70 % en poids sec de matières minérales, par rapport à son poids total.

Cette utilisation est enfin caractérisée en ce que lesdites matières minérales sont choisies parmi le carbonate de calcium naturel ou synthétique, les dolomies, le calcaire, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

Un autre objet de la présente invention est un procédé de fabrication d'une feuille de papier à partir d'une pâte à papier, caractérisé en ce que ladite pâte est issue d'une étape de mélange de fibres naturelles et / ou synthétiques, d'eau, et d'une dispersion et / ou d'une suspension aqueuse de matières minérales contenant un copolymère hydrosoluble constitué :
a) d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) et d'au moins un monomère oxyalkylé à insaturation éthylénique et terminé par une chaîne hydrophobe, de formule générale (I) : 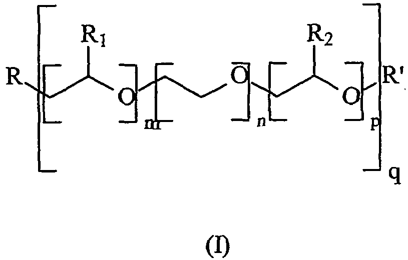 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, et en ce que le radical R' est de manière extrêmement préférentielle choisi parmi le 2-hexyl 1-decanyle et le 2-octyl 1-dodecanyle ou leurs mélanges.

Bien évidemment, l'homme du métier pourra mettre en oeuvre dans ce procédé, d'autres additifs bien connus de lui, et entrant généralement dans la fabrication d'une feuille de papier.

Ce procédé est aussi caractérisé en ce que outre au moins un monomère a) et au moins un monomère b), ledit copolymère contient aussi au moins un autre monomère, choisi parmi un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore parmi un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou bien parmi un monomère cationique ou ammonium quaternaire tels que préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou bien encore parmi un monomère organofluoré ou organosililé, ou bien parmi les monomères réticulants (monomères ayant au moins deux insaturations éthyléniques) tels que bien connus de l'homme du métier, ou bien des mélanges de ces monomères.

Ce procédé est aussi caractérisé en ce que ledit copolymère hydrosoluble est constitué, exprimé en pourcentage en poids de chacun des constituants :
a) de 5 % à 95 %, préférentiellement de 50 % à 95 %, très préférentiellement de 70 % à 95 % d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) de 5 % à 95 %, préférentiellement de 5 % à 50 %, très préférentiellement de 5 % à 30 % d'au moins un monomère oxyalkylé à insaturation éthylénique et terminé par une chaîne hydrophobe, de formule générale (I) : 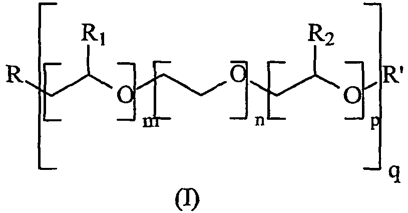 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe, choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, R' étant de manière extrêmement préférentielle choisi parmi le 2-hexyl 1-decanyle et le 2-octyl 1-dodecanyle ou leurs mélanges.

Ce procédé est aussi caractérisé en ce que ledit copolymère hydrosoluble est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Ce procédé est aussi caractérisé en ce que ledit copolymère hydrosoluble obtenu sous forme acide et éventuellement distillé, peut également être partiellement ou totalement neutralisé par un ou plusieurs agents de neutralisation disposant d'une fonction monovalente ou d'une fonction polyvalente, choisis dans le groupe constitué par les cations alcalins, et préférentiellement parmi le sodium, le potassium, l'ammonium ou choisis dans le groupe constitué des amines primaires, secondaires ou tertiaires aliphatiques et/ou cycliques et préférentiellement parmi la stéarylamine, les éthanolamines (mono-, di-, triéthanolamine), la mono et diéthylamine, la cyclohexylamine, la méthylcyclohexylamine ou choisis dans le groupe constitué par les cations divalents alcalino-terreux, et préférentiellement parmi le magnésium, le calcium, le zinc, ou choisis dans le groupe constitué par les cations trivalents, et est préférentiellement l'aluminium.

Chaque agent de neutralisation intervient alors selon des taux de neutralisation propres à chaque fonction de valence.

Ce procédé est aussi caractérisé en ce que le copolymère issu de la réaction de copolymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges. L'une des phases correspond alors au copolymère utilisé selon l'invention comme agent d'aide au broyage de matières minérales en suspension aqueuse.

Ce procédé est aussi caractérisé en ce qu'on met en oeuvre une quantité dudit copolymère hydrosoluble comprise entre 0,1 % et 3 %, préférentiellement de 0,2 % à 1,5 %, très préférentiellement de 0,3 % à 1 % en poids sec par rapport au poids sec total de matières minérales.

Ce procédé est aussi caractérisé en ce que la suspension et / ou la dispersion aqueuse de matières minérales contient au moins 10 %, préférentiellement au moins 20 %, très préférentiellement au moins 50 % et de manière extrêmement préférentielle au moins 70 % en poids sec de matières minérales, par rapport à son poids total.

Ce procédé est aussi caractérisé en ce que lesdites matières minérales sont choisies parmi le carbonate de calcium naturel ou synthétique, les dolomies, le calcaire, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

Un autre objet de l'invention réside dans les feuilles de papier caractérisées en ce qu'elles contiennent des matières minérales, et au moins un copolymère hydrosoluble constitué :
a) d'au moins un monomère anionique à insaturation éthylénique,
b) et d'au moins un monomère oxyalkylé à insaturation éthylénique et terminé par une chaîne hydrophobe.

Ces feuilles sont aussi caractérisées en ce que lesdites matières minérales ont été broyées et / ou dispersées en milieu aqueux en présence dudit copolymère.

Ces feuilles sont aussi caractérisées en ce que ledit copolymère est constitué :
a) d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) et d'au moins un monomère oxyalkylé à insaturation éthylénique et terminé par une chaîne hydrophobe, de formule générale (I) : 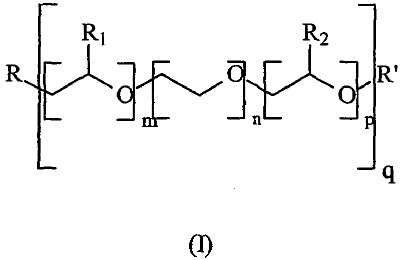 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe.

Ces feuilles sont aussi caractérisées en ce que le radical R' est choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, et en ce que le radical R' est de manière extrêmement préférentielle choisi parmi le 2-hexyl 1-decanyle et le 2-octyl 1-dodecanyle ou leurs mélanges.

Ces feuilles sont aussi caractérisées en ce que outre au moins un monomère a) et au moins un monomère b), ledit copolymère contient aussi au moins un autre monomère, choisi parmi un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore parmi un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou bien parmi un monomère cationique ou ammonium quaternaire tels que préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou bien encore parmi un monomère organofluoré ou organosililé, ou bien parmi les monomères réticulants (monomères ayant au moins deux insaturations éthyléniques) tels que bien connus de l'homme du métier, ou bien des mélanges de ces monomères.

Ces feuilles sont aussi caractérisées en ce que ledit copolymère hydrosoluble est constitué, exprimé en pourcentage en poids de chacun des constituants :
a) de 5 % à 95 %, préférentiellement de 50 % à 95 %, très préférentiellement de 70 % à 95 % d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) de 5 % à 95 %, préférentiellement de 5 % à 50 %, très préférentiellement de 5 % à 30 % d'au moins un monomère oxyalkylé à insaturation éthylénique et terminé par une chaîne hydrophobe, de formule générale (I) : 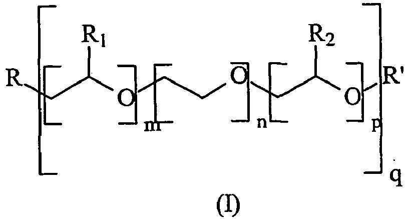 dans laquelle :
   - m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
   - R₁ représente l'hydrogène ou le radical méthyle ou éthyle,
   - R₂ représente l'hydrogène ou le radical méthyle ou éthyle,
   - R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
   - R' représente un radical hydrophobe choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, R' étant de manière extrêmement préférentielle choisi parmi le 2-hexyl 1-decanyle et le 2-octyl 1-dodecanyle ou leurs mélanges.

Ces feuilles sont aussi caractérisées en ce que ledit copolymère hydrosoluble est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Ces feuilles sont aussi caractérisées en ce que ledit copolymère hydrosoluble obtenu sous forme acide et éventuellement distillé, peut être également partiellement ou totalement neutralisé par un ou plusieurs agents de neutralisation disposant d'une fonction monovalente ou d'une fonction polyvalente, choisis dans le groupe constitué par les cations alcalins, et préférentiellement parmi le sodium, le potassium, l'ammonium ou choisis dans le groupe constitué des amines primaires, secondaires ou tertiaires aliphatiques et/ou cycliques et préférentiellement parmi la stéarylamine, les éthanolamines (mono-, di-, triéthanolamine), la mono et diéthylamine, la cyclohexylamine, la méthylcyclohexylamine ou choisis dans le groupe constitué par les cations divalents alcalino-terreux, et préférentiellement parmi le magnésium, le calcium, le zinc, ou choisis dans le groupe constitué par les cations trivalents, et est préférentiellement l'aluminium.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent d'aide au broyage de matières minérales en suspension aqueuse.

Ces feuilles sont aussi caractérisées en ce que lesdites matières minérales sont choisies parmi le carbonate de calcium naturel ou synthétique, les dolomies, le calcaire, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

Les exemples qui suivent permettent de mieux apprécier l'intérêt de l'invention, sans toutefois en limiter la portée.

### EXEMPLES

### Exemple 1

Cet exemple a pour objet d'illustrer la mise en oeuvre, dans la fabrication d'une feuille de papier, d'une suspension aqueuse de carbonate de calcium broyé avec un copolymère selon l'invention.

Cet exemple démontre également qu'une telle utilisation permet de ralentir la pénétration d'une sauce de couchage à l'intérieur de ladite feuille, par rapport à une feuille contenant un carbonate de calcium préparé avec un agent de broyage de l'art antérieur.

Cet exemple illustre aussi les feuilles de papier obtenues selon l'invention.

Pour chacun des essais n° 1 à 4, on commence par préparer une suspension aqueuse de carbonate de calcium par broyage, selon les méthodes bien connues de l'homme du métier (notamment comme indiqué dans le document FR 2 846 978), soit en présence d'un agent d'aide au broyage de l'art antérieur (essais n° 1 et 2) soit en présence d'un copolymère selon l'invention (essais n° 3 et 4).

Dans un deuxième temps, on réalise pour chacun des essais n° 1 à 4 des formettes, c'est-à-dire des feuilles de papier, à partir d'une pulpe thermo-mécanique (100 % blanchie au peroxyde d'hydrogène) et d'une suspension aqueuse de carbonate de calcium obtenue selon chacun des essais n° 1 à 4, de manière à ce que le pourcentage en poids sec de carbonate de calcium dans la formette soit égal à 8 % de son poids total. La formette est réalisée avec un appareil de laboratoire du type Rapid Köthen™.

Dans un troisième temps, on réalise une sauce de couchage constituée de :
- 80 parts en poids sec d'un carbonate de calcium, commercialisé par la société OMYA™ sous le nom de Hydrocarb™ 90,
- 20 parts en poids sec de kaolin brésilien,
- 6 parts en poids sec de latex styrène butadiène DL966 commercialisé par la société DOW™ CHEMICALS,
- 6 parts en poids sec d'amidon oxydé C-Film™ commercialisé par la société CERESTAR™,
ladite sauce ayant une teneur en matière sèche égale à 63 % de son poids total.

Dans un cinquième et dernier temps, on mesure la vitesse de pénétration de cette sauce dans la formette (feuille de papier), à partir d'un appareil EMTEC™ PDA C2 commercialisé par la société EMTEC™. Cet appareil permet la détermination dynamique de la pénétration d'un liquide dans un support tel qu'un papier, par ultrasons.

Cet appareil fonctionne de la façon suivante : un signal ultrasonique est utilisé pour quantifier les interactions entre papier et liquide. La sauce, en pénétrant dans le papier, change la transmission ultrasonique et par la-même l'intensité au niveau du récepteur. Ce changement d'intensité en fonction du temps se traduit sur un graphe Intensité (%) en fonction du Temps (s).

L'interaction entre la sauce et le support est déterminée par la structure de la surface, en particulier par sa structure poreuse, mais aussi par la qualité de la sauce de couchage. La courbe "idéale" passe, après le contact de la sauce avec la feuille, par un pic durant les premières millisecondes (1^{ère} phase) puis décroît lentement (2^{ème} phase).

Cela peut se traduire par :
- une pénétration homogène de la sauce et une immobilisation rapide sur le support pendant la 1^{ère} phase ; il y a alors peu ou pas d'air emprisonné et donc peu ou pas de dispersion du signal ultrason ; on observe alors une augmentation de la transmission ultrasonique et donc une augmentation de l'intensité au niveau du récepteur,
- l'immobilisation de la sauce se poursuit dans le support au cours d'une 2^{ème} phase avec un ralentissement de la pénétration de ladite sauce en raison du film formé ; pendant cette phase, plus la vitesse de pénétration de la sauce est importante, plus la quantité d'air emprisonné augmente ; les domaines localisés dans lesquels de l'air est emprisonné agissent comme des points de diffusion du signal ultrason ; on observe alors une diminution de l'intensité du signal, qui est donc d'autant plus importante que la quantité d'air emprisonné est grande, c'est-à-dire que la vitesse de pénétration de la sauce est élevée.

Par conséquent, la comparaison entre les courbes intensité en fonction du temps pour les différentes formettes contenant les différentes suspensions aqueuses de carbonate de calcium, permet de déterminer quelles formettes (et donc quelles suspensions aqueuses) conduisent aux meilleures résistances à la pénétration de la sauce.

### Essai n° 1

Cet essai illustre l'art antérieur et met en oeuvre comme agent d'aide au broyage 0,45 % en poids sec, par rapport au poids sec de carbonate de calcium, un homopolymère de l'acide acrylique totalement neutralisé.

### Essai n° 2

Cet essai illustre l'art antérieur et met en oeuvre comme agent d'aide au broyage 0,45 % en poids sec, par rapport au poids sec de carbonate de calcium, un copolymère hydrosoluble totalement neutralisé et constitué de :
a) 75 % en poids d'acide acrylique,
b) 25 % en poids d'acrylate de lauryle.

### Essai n° 3

Cet essai illustre l'invention et met en oeuvre comme agent d'aide au broyage 0,45 % en poids sec, par rapport au poids sec de carbonate de calcium, un copolymère hydrosoluble totalement neutralisé et constitué de :
d) 75 % en poids d'acide acrylique,
e) 25 % en poids en poids du monomère de formule (I) dans lequel :
   - R représente un radical méthacrylate,
   - R'représente la chaîne hydrophobe non aromatique à 20 atomes de carbone 2-octyl 1-dodecanyle,
   - m = p = 0,
   - q = 1,
   - n = 25.

### Essai n° 4

Cet essai illustre l'invention et met en oeuvre comme agent d'aide au broyage 0,45 % en poids sec, par rapport au poids sec de carbonate de calcium, un copolymère hydrosoluble totalement neutralisé et constitué de :
a) 75 % en poids d'acide acrylique,
b) 25 % en poids du monomère de formule (I) dans lequel :
   - R représente un radical méthacrylate,
   - R'représente une chaîne hydrophobe linéaire à 16 atomes de carbone de carbone 2-hexyl 1-decanyle,
   - m = p = 0,
   - q = 1,
   - n = 25.

Les caractéristiques des suspensions aqueuses de carbonate de calcium réalisées pour les essais n° 1 à 4 (extrait sec, viscosités Brookfield™ mesurées à 10 et 100 tours par minute aux instant t=0 et t=8 jours après agitation, leur granulométrie telle que mesurée à partir d'un Sedigraph™ 5100 commercialisé par la société MICROMERITICS™) sont indiquées dans le tableau 1.

**Tableau 1**

| essai n° | art antérieur / invention | extrait sec (%) * | granulométrie (% < 2 µm) ** | µ t=0*** | | µ t=8j **** | |
|---|---|---|---|---|---|---|---|
| | | | | 10 t/min | 100 t/min | 10 t/min | 100 t/min |
| 1 | art antérieur | 74,6 | 74,8 | 335 | 160 | 600 | 205 |
| 2 | art antérieur | 75 | 74,3 | 1455 | 335 | 1780 | 345 |
| 3 | invention | 74,5 | 76,6 | 3380 | 635 | 4460 | 835 |
| 4 | invention | 74,5 | 75,2 | 2790 | 550 | 4630 | 810 |

| | | | | | | | |
|---|---|---|---|---|---|---|---|
| * extrait sec exprimé en pourcentage en poids sec de carbonate de calcium par rapport au poids total de la suspension considérée ** pourcentage de particules en poids dont le diamètre est inférieur à 2 µm *** viscosité Brookfield™ mesurée à l'instant t=0, et à 10 ou 100 tours par minute **** viscosité Brookfield™ mesurée à l'instant t=8 jours et après agitation, et à 10 ou 100 tours par minute | | | | | | | |

Ce tableau démontre que les caractéristiques des suspensions aqueuses de carbonate de calcium obtenues selon l'invention, sont compatibles avec une utilisation en charge de masse (en termes d'extrait sec, de granulométrie, et de viscosités Brookfield™).

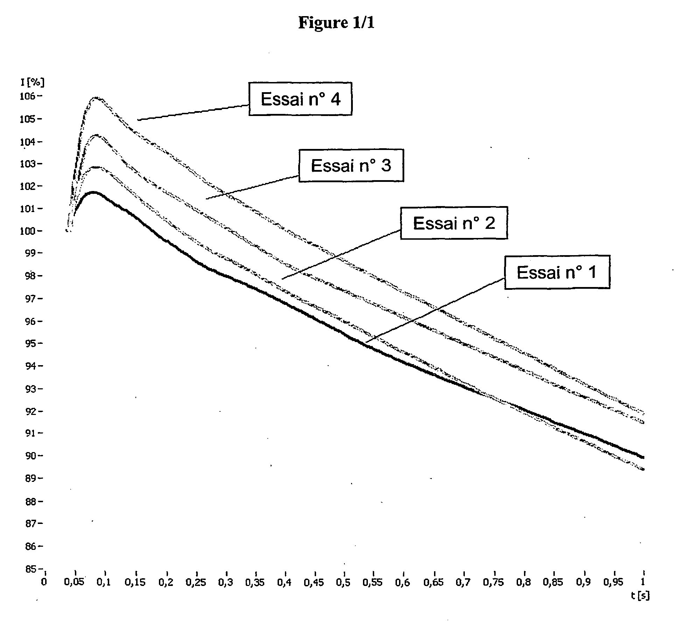

Les courbes intensité en fonction du temps, pour les essais n° 1 à 4, ont été représentées sur la figure 1/1.

L'examen de cette figure démontre clairement que les formettes réalisées avec une suspension aqueuse de carbonate de calcium, broyé selon l'invention, conduisent aux intensités les plus élevées et donc, à un ralentissement notable de la pénétration de la sauce de couchage au cours du temps.

### Exemple 2

Cet exemple a pour objet d'illustrer la mise en oeuvre, dans la fabrication d'une feuille de papier, d'une suspension aqueuse de carbonate de calcium broyé avec un copolymère selon l'invention.

Cet exemple démontre également qu'une telle utilisation permet de ralentir la pénétration d'une sauce de couchage à l'intérieur de ladite feuille, par rapport à une feuille contenant un carbonate de calcium préparé avec un agent de broyage de l'art antérieur.

Cet exemple illustre aussi les feuilles de papier obtenues selon l'invention.

Pour chacun des essais n° 5 à 16, on commence par préparer une suspension aqueuse de carbonate de calcium par broyage, selon les méthodes bien connues de l'homme du métier (notamment comme indiqué dans le document FR 2 846 978), soit en présence d'un agent d'aide au broyage de l'art antérieur (essais n° 5 à 7) soit en présence d'un copolymère selon l'invention (essais n° 8 à 16).

On réalise, de la même manière que pour l'exemple 1, une formette de papier, puis une sauce de couchage (composition identique à celle de l'exemple 1), et on suit selon le protocole de l'exemple 1 la pénétration de chaque sauce de couchage au sein de la formette.

### Essai n° 5

Cet essai illustre l'art antérieur et met en oeuvre comme agent d'aide au broyage 0,50 % en poids sec, par rapport au poids sec de carbonate de calcium, un homopolymère de l'acide acrylique totalement neutralisé par la soude.

### Essai n° 6

Cet essai illustre l'art antérieur et met en oeuvre comme agent d'aide au broyage 0,50 % en poids sec, par rapport au poids sec de carbonate de calcium, un copolymère de l'acide acrylique et de l'acide méthacrylique (50 / 50 en pourcentage en poids de ces monomères) totalement neutralisé par la soude.

### Essai n° 7

Cet essai illustre l'art antérieur et met en oeuvre comme agent d'aide au broyage 0,50 % en poids sec, par rapport au poids sec de carbonate de calcium, un copolymère de l'acide acrylique et de l'anhydride maléique (50 / 50 en pourcentage en poids de ces monomères) totalement neutralisé par la soude.

### Essai n° 8

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 80 % en poids d'acide acrylique,
b) 20 % en poids en poids du monomère de formule (I) dans lequel :
   - R représente un radical méthacrylate,
   - R'représente la chaîne hydrophobe non aromatique à 20 atomes de carbone 2-octyl 1-dodecanyle,
   - m = p = 0, q = 1, n = 25.

### Essai n° 9

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 85 % en poids d'acide acrylique,
b) 15 % en poids en poids du monomère de formule (I) dans lequel :
   - R représente un radical méthacrylate,
   - R'représente la chaîne hydrophobe non aromatique à 20 atomes de carbone 2-octyl 1-dodecanyle,
   - m = p = 0, q = 1, n = 25.

### Essai n° 10

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 90 % en poids d'acide acrylique,
b) 10 % en poids en poids du monomère de formule (I) dans lequel :
   - R représente un radical méthacrylate,
   - R'représente la chaîne hydrophobe non aromatique à 20 atomes de carbone 2-octyl 1-dodecanyle,
   - m=p=0, q=1, n=25.

### Essai n° 11

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 80 % en poids d'acide acrylique,
b) 20 % en poids du monomère de formule (I) dans lequel :
   - R représente un radical méthacrylate,
   - R'représente une chaîne hydrophobe linéaire à 16 atomes de carbone de carbone 2-hexyl 1-decanyle,
   - m = p = 0, q = 1, n = 25.

### Essai n° 12

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 85 % en poids d'acide acrylique,
b) 15 % en poids du monomère de formule (I) dans lequel :
   - R représente un radical méthacrylate,
   - R'représente une chaîne hydrophobe linéaire à 16 atomes de carbone de carbone 2-hexyl 1-decanyle,
   - m = p = 0, q = 1, n = 25.

### Essai n° 13

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 90 % en poids d'acide acrylique,
b) 10 % en poids du monomère de formule (I) dans lequel :
   - R représente un radical méthacrylate,
   - R'représente une chaîne hydrophobe linéaire à 16 atomes de carbone de carbone 2-hexyl 1-decanyle,
   - m = p = 0, q = 1, n = 25.

### Essai n° 14

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 75 % en poids d'acide acrylique,
b) 25 % en poids du monomère de formule (I) dans lequel :
   - R représente un radical méthacrylate,
   - R'représente le tristyrylphényl,
   - m = p = 0, q = 1, n = 25.

### Essai n° 15

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 80 % en poids d'acide acrylique,
b) 20 % en poids du monomère de formule (I) dans lequel :
   - R représente un radical méthacrylate,
   - R'représente le tristyrylphényl,
   - m = p = 0, q = 1, n = 40.

### Essai n° 16

Cet essai illustre l'invention et met en oeuvre comme agent d'aide au broyage 0,50 % en poids sec, par rapport au poids sec de carbonate de calcium, un copolymère hydrosoluble totalement neutralisé et constitué de :
a) 85 % en poids d'acide acrylique,
b) 15 % en poids du monomère de formule (I) dans lequel :
   - R représente un radical méthacrylate,
   - R'représente le tristyrylphényl,
   - m = p = 0, q = 1, n = 60.

Les caractéristiques des suspensions aqueuses de carbonate de calcium réalisées pour les essais n° 5 à 16 (extrait sec, viscosités Brookfield™ mesurées à 10 et 100 tours par minute aux instant t = 0 et t = 8 jours après agitation, leur granulométrie telle que mesurée à partir d'un Sedigraph™ 5100 commercialisé par la société MICROMERITICS™) sont indiquées dans le tableau 3.

Le tableau 3 démontre que les caractéristiques des suspensions aqueuses selon l'invention les rendent tout à fait manipulables, de même que compatibles avec une utilisation pour fabriquer des sauces de couchage.

**Tableau 3**

| essai n° | art antérieur / invention | extrait sec (%)* | Granulométrie (% < 2 µm) ** | µ t=0 *** | | µ t=8j **** | |
|---|---|---|---|---|---|---|---|
| | | | | 10t/min | 100t/min | 10t/min | 100t/min |
| 5 | art antérieur | 74,6 | 74,8 | 310 | 150 | 550 | 200 |
| 6 | art antérieur | 75 | 74,3 | 1400 | 300 | 1650 | 310 |
| 7. | art antérieur | 74,5 | 76,6 | 1920 | 450 | 2220 | 750 |
| 8 | invention | 74,5 | 75,2 | 2850 | 450 | 4200 | 800 |
| 9 | invention | 75 | 75 | 2950 | 480 | 3750 | 720 |
| 10 | invention | 74,5 | 75,1 | 3100 | 500 | 3920 | 750 |
| 11 | invention | 74,6 | 74,6 | 2990 | 480 | 4050 | 810 |
| 12 | invention | 74,5 | 74,5 | 2820 | 410 | 3870 | 760 |
| 13 | invention | 74,7 | 74,3 | 2850 | 390 | 3910 | 790 |
| 14 | invention | 75 | 74,4 | 3100 | 490 | 4000 | 810 |
| 15 | invention | 74,2 | 74,6 | 3000 | 470 | 3980 | 790 |
| 16 | invention | 74,3 | 74,3 | 3010 | 460 | 4010 | 780 |

| | | | | | | | |
|---|---|---|---|---|---|---|---|
| * extrait sec exprimé en pourcentage en poids sec de carbonate de calcium par rapport au poids total de la suspension considérée ** pourcentage de particules en poids dont le diamètre est inférieur à 2 µm *** viscosité Brookfield™ mesurée à l'instant t=0, et à 10 ou 100 tours par minute **** viscosité Brookfield™ mesurée à l'instant t=8 jours et après agitation, et à 10 ou 100 tours par minute | | | | | | | |

Pour chacun des essais, on a relevé la valeur de l'intensité mesurée avec l'appareil EMTEC™, aux instants t = 0,1 0,5 et 1 seconde. Les résultats apparaissent dans le tableau 4.

L'intensité est toujours plus élevée dans le cas de l'invention que pour l'art antérieur et ce, quel que soit l'instant de mesure. Ceci démontre bien qu'il y a moins d'air emprisonné dans le cas des expériences avec l'invention : la sauce de couchage est ralentie dans sa pénétration au sein de la formette de papier.

**Tableau 4**

| Essai n° | 5 | 6 | 7 | 8 | 9 | 10 |
|---|---|---|---|---|---|---|
| Art Antérieur / INvention | AA | AA | AA | IN | IN | IN |
| I_{0,1} (%) | 103,2 | 103,0 | 102,9 | 106,4 | 107,5 | 106,5 |
| I_{0,5} (%) | 97,8 | 98,0 | 97,6 | 100,0 | 101,2 | 100,9 |
| I₁ (%) | 90,7 | 91,0 | 90,9 | 96,0 | 97,9 | 97,5 |
| | | | | | | |

| Essai n° | 11 | 12 | 13 | 14 | 15 | 16 |
|---|---|---|---|---|---|---|
| Art Antérieur / INvention | IN | IN | IN | IN | IN | IN |
| I_{0,1} (%) | 107,2 | 108,1 | 107,4 | 106,3 | 107,6 | 106,4 |
| I_{0,5} (%) | 102,2 | 102,5 | 102,1 | 100,0 | 101,1 | 100,2 |
| I₁ (%) | 98,2 | 98,3 | 98,0 | 96,2 | 97,0 | 97,0 |

### Exemple 3

Cet exemple a pour objet d'illustrer la mise en oeuvre, dans la fabrication d'une feuille de papier, d'une dispersion aqueuse de carbonate de calcium dispersé avec un copolymère selon l'invention.

Cet exemple démontre également qu'une telle utilisation permet de ralentir la pénétration d'une sauce de couchage à l'intérieur de ladite feuille, par rapport à une feuille contenant un carbonate de calcium préparé avec un agent dispersant de l'art antérieur.

Cet exemple illustre aussi les feuilles de papier obtenues selon l'invention.

Pour chacun des essais n° 17 à 19, on commence par préparer une dispersion aqueuse de carbonate de calcium, en concentrant thermiquement un gâteau de carbonate de calcium ayant un extrait sec initial égal à 40 % de son poids total, à un extrait sec supérieur à 50 % de son poids total et ce, en présence d'un agent dispersant de l'art antérieur ou selon l'invention.

Une telle méthode est notamment décrite dans le document FR 2 802 830.

On réalise, de la même manière que pour l'exemple 1, une formette de papier, puis une sauce de couchage (composition identique à celle de l'exemple 1), et on suit selon le protocole de l'exemple 1 la pénétration de chaque sauce de couchage au sein de la formette.

### Essai n° 17

Cet essai illustre l'art antérieur et met en oeuvre comme agent dispersant 0,60 % en poids sec, par rapport au poids sec de carbonate de calcium, un copolymère de l'acide acrylique et de l'anhydride maléique.

### Essai n° 18

Cet essai illustre l'invention et met en oeuvre comme agent dispersant 0,60 % en poids sec, par rapport au poids sec de carbonate de calcium, un copolymère hydrosoluble totalement neutralisé et constitué de :
a) 80 % en poids d'acide acrylique,
b) 20 % en poids en poids du monomère de formule (I) dans lequel :
   - R représente un radical méthacrylate,
   - R'représente la chaîne hydrophobe non aromatique à 20 atomes de carbone 2-octyl 1-dodecanyle,
   - m = p = 0, q = 1, n = 25.

### Essai n° 19

Cet essai illustre l'invention et met en oeuvre comme agent dispersant 0,60 % en poids sec, par rapport au poids sec de carbonate de calcium, un copolymère hydrosoluble totalement neutralisé et constitué de :
a) 80 % en poids d'acide acrylique,
b) 20 % en poids du monomère de formule (I) dans lequel :
   - R représente un radical méthacrylate,
   - R'représente une chaîne hydrophobe linéaire à 16 atomes de carbone de carbone 2-hexyl 1-decanyle,
   - m = p = 0, q = 1, n = 25.

Les caractéristiques des dispersions aqueuses de carbonate de calcium réalisées pour les essais n° 17 à 19 (extrait sec, viscosités Brookfield™ mesurées à 10 et 100 tours par minute aux instant t = 0 et t = 8 jours après agitation) sont indiquées dans le tableau 5.

Le tableau 5 démontre que les caractéristiques des suspensions aqueuses selon l'invention les rendent tout à fait manipulables, de même que compatibles avec une utilisation pour fabriquer des sauces de couchage.

**Tableau 5**

| essai n° | art antérieur / invention | extrait sec (%)* | µ t = 0 *** | | µ t = 8j **** | |
|---|---|---|---|---|---|---|
| | | | 10 t/min | 100 t/min | 10 t/min | 100 t/min |
| 5 | art antérieur | 50,2 | 280 | 140 | 480 | 200 |
| 8 | invention | 50,4 | 2020 | 430 | 2350 | 900 |
| 9 | invention | 50,3 | 2050 | 450 | 2750 | 850 |

| | | | | | | |
|---|---|---|---|---|---|---|
| * extrait sec exprimé en pourcentage en poids sec de carbonate de calcium par rapport au poids total de la dispersion considérée *** viscosité Brookfield™ mesurée à l'instant t=0, et à 10 ou 100 tours par minute **** viscosité Brookfield™ mesurée à l'instant t=8 jours et après agitation, et à 10 ou 100 tours par minute | | | | | | |

Pour chacun des essais, on a relevé la valeur de l'intensité mesurée avec l'appareil EMTEC™, aux instants t= 0,1 0,5 et 1 seconde. Les résultats apparaissent dans le tableau 6.

L'intensité est toujours plus élevée dans le cas de l'invention que pour l'art antérieur et ce, quel que soit l'instant de mesure. Ceci démontre bien qu'il y a moins d'air emprisonné dans le cas des expériences avec l'invention : la sauce de couchage est ralentie dans sa pénétration au sein de la formette de papier.

**Tableau 6**

| Essai n° | 17 | 18 | 19 |
|---|---|---|---|
| Art Antérieur / INvention | AA | IN | IN |
| I_{0,1} (%) | 101,1 | 104,5 | 104,5 |
| I_{0,5} (%) | 96,5 | 97,9 | 97,9 |
| I₁(%) | 87,7 | 95,3, | 95,5 |

## Revendications

1. Utilisation, dans un procédé de fabrication d'une feuille de papier, comme agent ralentissant la pénétration d'une sauce de couchage à l'intérieur de ladite feuille, d'une dispersion et / ou d'une suspension aqueuse de matières minérales, **caractérisée en ce qu'**elle contient au moins un copolymère hydrosoluble constitué :
a) d'au moins un monomère anionique à insaturation éthylénique,
b) et d'au moins un monomère oxyalkylé à insaturation éthylénique et terminé par une chaîne hydrophobe.

2. Utilisation, selon la revendication 1, **caractérisée en ce que** ledit copolymère hydrosoluble est mis en oeuvre pendant au moins une étape de broyage et / ou de dispersion en milieu aqueux desdites matières minérales.

3. Utilisation selon l'une des revendications 1 ou 2, **caractérisée en ce que** ledit copolymère hydrosoluble est constitué :
a) d'au moins un monomère anionique à insaturation éthylénique, qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) et d'au moins un monomère oxyalkylé à insaturation éthylénique et terminé par une chaîne hydrophobe, de formule générale (I) : 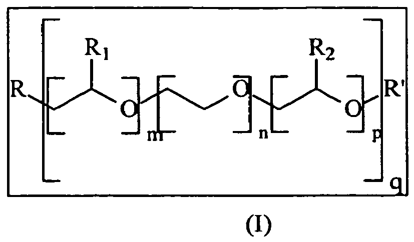 dans laquelle :
- m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100
- R₁ représente l'hydrogène ou le radical méthyle ou éthyle,
- R₂ représente l'hydrogène ou le radical méthyle ou éthyle,
- R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, α - α' diméthyl-m-isopropenyl- benzyluréthanne, allyluréthanne,
- R' représente un radical hydrophobe.

4. Utilisation selon l'une des revendications 1 à 3, **caractérisée en ce que** le radical R' est choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, et **en ce que** le radical R' est de manière extrêmement préférentielle choisi parmi le 2-hexyl 1-decanyle et le 2-octyl 1-dodecanyle et leurs mélanges.

5. Utilisation selon l'une des revendications 1 à 4, **caractérisée en ce que** outre au moins un monomère a) et au moins un monomère b), ledit copolymère contient aussi au moins un autre monomère, choisi parmi un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore parmi un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou bien parmi un monomère cationique ou ammonium quaternaire tels que préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou bien encore parmi un monomère organofluoré ou organosililé, ou bien parmi les monomères réticulants ayant au moins deux insaturations éthyléniques, ou bien des mélanges de ces monomères.

6. Utilisation, selon la revendication 1 à 5, **caractérisée en ce que** ledit copolymère hydrosoluble est constitué, exprimé en pourcentage en poids de chacun des constituants:
a) de 5 % à 95 %, préférentiellement de 50 % à 95 %, très préférentiellement de 70 % à 95 % d'au moins un monomère anionique à insaturation éthylénique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) de 5 % à 95 %, préférentiellement de 5 % à 50 %, très préférentiellement de 5 % à 30 % d'au moins un monomère oxyalkylé à insaturation éthylénique et terminé par une chaîne hydrophobe, de formule générale (I) : 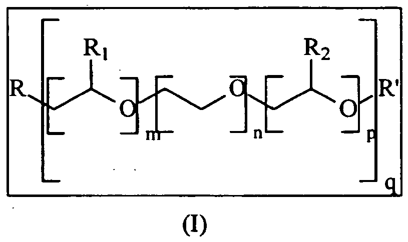 dans laquelle :
- m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
- R₁ représente l'hydrogène ou le radical méthyle ou éthyle,
- R₂ représente l'hydrogène ou le radical méthyle ou éthyle,
- R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-m-isopropenyl- benzyluréthanne, allyluréthanne,
- R' représente un radical hydrophobe choisi parmi le radical tristyrylphényle ou parmi les dialkylamines ayant au moins 8 atomes de carbone, ou parmi les groupes linéaires ou ramifiés alkyle, alkylaryle, arylalkyle, aryle ayant au moins 8 atomes de carbone, et préférentiellement de 10 à 24 atomes de carbone, très préférentiellement de 16 à 20 atomes de carbone tout en possédant 2 ramifications ayant au moins 6 atomes de carbone, ou les mélanges de ces radicaux, R' étant de manière extrêmement préférentielle choisi parmi le 2-hexyl 1-decanyle et le 2-octyl 1-dodecanyle et leurs mélanges.

7. Utilisation, selon l'une des revendications 1 à 6, **caractérisée en ce que** ledit copolymère hydrosoluble est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

8. Utilisation, selon l'une des revendications 1 à 7, **caractérisée en ce que** ledit copolymère hydrosoluble obtenu sous forme acide et éventuellement distillé, est également partiellement ou totalement neutralisé par un ou plusieurs agents de neutralisation disposant d'une fonction monovalente ou d'une fonction polyvalente, choisis dans le groupe constitué par les cations alcalins, et préférentiellement parmi le sodium, le potassium, l'ammonium ou choisis dans le groupe constitué des amines primaires, secondaires ou tertiaires aliphatiques et / ou cycliques et préférentiellement parmi la stéarylamine, les éthanolamines (mono-, di-, triéthanolamine), la mono et diéthylamine, la cyclohexylamine, la méthylcyclohexylamine ou choisis dans le groupe constitué par les cations divalents alcalino-terreux, et préférentiellement parmi le magnésium, le calcium, le zinc, ou choisis dans le groupe constitué par les cations trivalents, et est préférentiellement l'aluminium.

9. Utilisation, selon l'une des revendications 1 à 8, **caractérisée en ce que** ledit copolymère hydrosoluble issu de la réaction de copolymérisation est avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

10. Utilisation, selon l'une des revendications 1 à 9, **caractérisée en ce qu'**elle met en oeuvre une quantité dudit copolymère hydrosoluble comprise entre 0,1 % et 3 %, préférentiellement de 0,2 % à 1,5 %, très préférentiellement de 0,3 % à 1 % en poids sec par rapport au poids sec total de matières minérales.

11. Utilisation, selon l'une des revendications 1 à 10, **caractérisée en ce que** la suspension et / ou la dispersion aqueuse de matières minérales contient au moins 10 %, préférentiellement au moins 20 %, très préférentiellement au moins 50 % et de manière extrêmement préférentielle au moins 70 % en poids sec de matières minérales, par rapport à son poids total.

12. Utilisation, selon l'une des revendications 1 à 11, **caractérisée en ce que** lesdites matières minérales sont choisies parmi le carbonate de calcium naturel ou synthétique, les dolomies, le calcaire, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et **en ce que** lesdites matières minérales sont choisies préférentiellement parmi le carbonate de calcium naturel ou synthétique ou le talc ou leurs mélanges, et **en ce qu'**elles sont très préférentiellement choisies parmi le carbonate de calcium naturel ou synthétique ou leurs mélanges.

13. Feuilles de papier, **caractérisées en ce qu'**elles contiennent des matières minérales, et au moins un copolymère hydrosoluble constitué, exprimé en pourcentage en poids de chacun des constituants:
a) de 5 % à 95 %, préférentiellement de 50 % à 95 %, très préférentiellement de 70 % à 95 % d'au moins un monomère anionique qui est un monomère anionique à insaturation éthylénique à l'état acide ou salifié, choisi parmi les monomères anioniques à insaturation éthylénique et ayant une fonction monocarboxylique à l'état acide ou salifié, et préférentiellement parmi l'acide acrylique, méthacrylique, crotonique, isocrotonique, cinnamique ou les hémiesters de diacides tels que les monoesters en C₁ à C₄ des acides maléique ou itaconique, ou choisi parmi les monomères à insaturation éthylénique ayant une fonction dicarboxylique à l'état acide ou salifié, et préférentiellement parmi l'acide itaconique, maléique, fumarique, mésaconique, citraconique ou encore les anhydrides d'acides carboxyliques, tels que l'anhydride maléique ou choisi parmi les monomères à insaturation éthylénique et à fonction sulfonique à l'état acide ou salifié, et préférentiellement parmi l'acide acrylamido-2-méthyl-2-propane-sulfonique, le méthallylsulfonate de sodium, l'acide vinyl sulfonique et l'acide styrène sulfonique ou bien encore choisi parmi les monomères à insaturation éthylénique et à fonction phosphorique à l'état acide ou salifié, et préférentiellement parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique à l'état acide ou salifié, et est préférentiellement l'acide vinyl phosphonique, ou leurs mélanges,
b) de 5 % à 95 %, préférentiellement de 5 % à 50 %, très préférentiellement de 5 % à 30 % d'au moins un monomère oxyalkylé à insaturation éthylénique et terminé par une chaîne hydrophobe, de formule générale (I) : 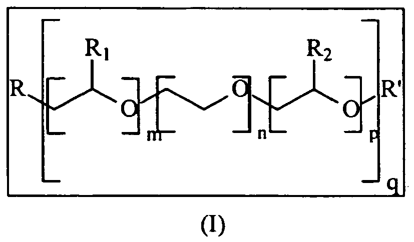 dans laquelle :
- m et p représentent un nombre de motifs d'oxyde d'alkylène inférieur ou égal à 100, n représente un nombre de motifs d'oxyde d'éthylène inférieur ou égal à 100, et q un nombre au moins égal à 1 avec 0 ≤ q(n+m+p) ≤ 100,
- R₁ représente l'hydrogène ou le radical méthyle ou éthyle,
- R₂ représente l'hydrogène ou le radical méthyle ou éthyle,
- R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, α - α' diméthyl-m-isopropenyl- benzyluréthanne, allyluréthanne,
- R' représente un radical hydrophobe qui est un groupe ramifié alkyle, alkylaryle, arylalkyle, aryle ayant de 16 à 20 atomes de carbone tout en possédant 2 ramifications ayant au moins 6 atomes de carbone, et **en ce que** le radical R' est de manière extrêmement préférentielle choisi parmi le 2-hexyl 1-decanyle et le 2-octyl 1-dodecanyle ou leurs mélanges.

14. Feuilles de papier selon la revendication 13, **caractérisées en ce que** lesdites matières minérales sont choisies parmi le carbonate de calcium naturel ou synthétique, les dolomies, le calcaire, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et **en ce que** lesdites matières minérales sont choisies préférentiellement parmi le carbonate de calcium naturel ou synthétique ou le talc ou leurs mélanges, et **en ce qu'**elles sont très préférentiellement choisies parmi le carbonate de calcium naturel ou synthétique ou leurs mélanges.

## Claims

1. Use, in a method for manufacturing a sheet of paper, as an agent for slowing the penetration of a paper coating color into said sheet, of a dispersion and/or of an aqueous suspension of mineral materials, **characterized in that** said suspension and/or dispersion contains at least one water-soluble copolymer made up of:
a) at least one ethylenically-unsaturated anionic monomer,
b) at least one ethylenically-unsaturated oxylalkylated monomer, terminating in a hydrophobic chain.

2. Use, according to claim 1, **characterized in that** said water-soluble copolymer is used during at least one grinding and/or dispersing step of said mineral materials in an aqueous medium.

3. Use, according to one of the claims 1 or 2, **characterized in that** said water-soluble copolymer is made up of:
a) at least one ethylenically-unsaturated anionic monomer which is an ethylenically-unsaturated anionic monomer in an acid or salt form, chosen from among ethylenically-unsaturated anionic monomers with a monocarboxylic function in their acid or salt form, and preferentially from among acrylic, methacrylic, crotonic, isocrotonic, or cinnamic acid, or diacid hemiesters such as C₁-C₄ monoesters of maleic or itaconic acids; or chosen from among ethylenically-unsaturated monomers with a dicarboxylic function in their acid or salt form, and preferentially from among itaconic, maleic, fumaric, mesaconic, or citraconic acid, or carboxylic acid anhydrides, such as maleic anhydride; or chosen from among ethylenically-unsaturated monomers with a sulfonic function in their acid or salt form, and preferentially from among acrylamido-2-methyl-2-propane-sulfonic acid, sodium methallylsulfonate, sulfonic vinyl acid, and sulfonic styrene acid; or chosen from among ethylenically-unsaturated monomers with a phosphoric function in their acid or salt form, and preferentially from among phosphoric vinyl acid, ethylene glycol methacrylate phosphate, propylene glycol methacrylate phosphate, ethylene glycol acrylate phosphate, propylene glycol acrylate phosphate and their ethoxylates; or from among ethylenically-unsaturated monomers with a phosphonic function in their acid or salt form, and is preferentially phosphonic vinyl acid; or mixtures thereof,
b) and at least one ethylenically-unsaturated oxyalkylated monomer terminated by a hydrophobic chain, whose general formula (I) is: 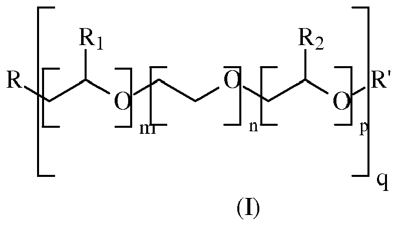 wherein:
- m and p represent a number of alkylene oxide units less than or equal to 100, n represents a number of ethylene oxide units less than or equal to 100, and q is a number at least equal to 1, with 0 ≤ q(n+m+p) ≤ 100,
- R₁ represents hydrogen or the methyl or ethyl radical,
- R₂ represents hydrogen or the methyl or ethyl radical,
- R represents the polymerizable unsaturated radical belonging to the group of acrylic, methacrylic, maleic, itaconic, crotonic, and vinylphtalic esters, as well as unsaturated urethanes such as, for example, acrylurethanes, methacrylurethanes, α-α' dimethyl-m-isopropenyl- benzylurethannes, and allylurethane,
- R' represents a hydrophobic radical.

4. Use, according to one of the claims 1 to 3, **characterized in that** the radical R' is chosen from among the radical tristyrylphenyl or from among dialkylamines with at least 8 carbon atoms, or from among linear or branched alkyl, alkylaryl, arylalkyl, and aryl groups with at least 8 carbon atoms, preferentially 10 to 24 carbon atoms, and very preferentially from 16 to 20 carbon atoms each with two branches having at least six carbon atoms, or mixtures of these radicals, and **in that** the radical R' being extremely preferentially chosen from among 2-hexyl 1-decanyl and 2-octyl 1-dodecanyl or mixtures thereof.

5. Use, according to one of the claims 1 to 4, **characterized in that** in addition to at least one a) monomer and at least one b) monomer, said copolymer further contains at least one other monomer, chosen from among an acrylamide or methacrylamide monomer or derivatives thereof, such as N-[3-(dimethylamino) propyl] acrylamide or N-[3-(dimethylamino) propyl] methacrylamide, and mixtures thereof; or from among a non-water-soluble monomer such as aklyl acrylates or methacrylates, unsaturated esters such as N-[2-(dimethylamino) ethyl] methacrylate, or N-[2-(dimethylamino) ethyl] acrylate, vinylics such as vinyl acetate, vinylpyrrolidone, styrene, alphamethylstyrene and derivatives thereof; or from among a cationic or quaternary ammonium monomer such as, preferentially, [2-(methacryloyloxy) ethyl] trimethyl ammonium sulfate or chloride, [2-(acryloyloxy) ethyl] trimethyl ammonium sulfate or chloride, [3-(acrylamido) propyl] trimethyl ammonium sulfate or chloride, dimethyl diallyl ammonium sulfate or chloride, [3-(methacrylamido) propyl] trimethyl ammonium sulfate or chloride; or from among an organofluorated or organosililated monomer, or from among those cross-linking monomers (i.e. monomers with at least two ethylene unsaturations), or mixtures of these monomers.

6. Use, according to one of the claims 1 to 5, **characterized in that** said water-soluble copolymer is made up of the following components, each expressed as a percentage by weight:
a) 5% to 95%, preferentially 50% to 95%, and very preferentially 70% to 95% of at least one ethylenically-unsaturated anionic monomer which is an ethylenically-unsaturated anionic monomer in an acid or salt form, chosen from among ethylenically-unsaturated anionic monomers with a monocarboxylic function in their acid or salt form, and preferentially from among acrylic, methacrylic, crotonic, isocrotonic, or cinnamic acid, or diacid hemiesters such as C₁-C₄ monoesters of maleic or itaconic acids; or chosen from among ethylenically-unsaturated monomers with a dicarboxylic function in their acid or salt form, and preferentially from among itaconic, maleic, fumaric, mesaconic, or citraconic acid, or carboxylic acid anhydrides, such as maleic anhydride; or chosen from among ethylenically-unsaturated monomers with a sulfonic function in their acid or salt form, and preferentially from among acrylamido-2-methyl-2-propane-sulfonic acid, sodium methallylsulfonate, sulfonic vinyl acid, and sulfonic styrene acid; or chosen from among ethylenically-unsaturated monomers with a phosphoric function in their acid or salt form, and preferentially from among phosphoric vinyl acid, ethylene glycol methacrylate phosphate, propylene glycol methacrylate phosphate, ethylene glycol acrylate phosphate, propylene glycol acrylate phosphate and their ethoxylates; or from among ethylenically-unsaturated monomers with a phosphonic function in their acid or salt form, and is preferentially phosphonic vinyl acid; or mixtures thereof,
b) 5% to 95%, preferentially 5% to 50%, and very preferentially 5% to 30% of at least one ethylenically-unsaturated oxyalkylated monomer terminated by a hydrophobic chain, whose general formula (I) is: 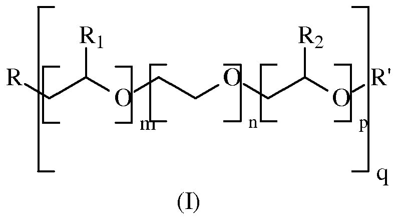 wherein:
- m and p represent a number of alkylene oxide units less than or equal to 100, n represents a number of ethylene oxide units less than or equal to 100, and q is a number at least equal to 1, with 0 ≤ q(n+m+p) ≤ 100,
- R₁ represents hydrogen or the methyl or ethyl radical,
- R₂ represents hydrogen or the methyl or ethyl radical,
- R represents the polymerizable unsaturated radical belonging to the group of acrylic, methacrylic, maleic, itaconic, crotonic, and vinylphtalic esters, as well as unsaturated urethanes such as, for example, acrylurethanes, methacrylurethanes, α-α' dimethyl-m-isopropenyl- benzylurethannes, and allylurethane,
- R' represents a hydrophobic radical, chosen from among the radical tristyrylphenyl or from among dialkylamines with at least 8 carbon atoms, or from among linear or branched alkyl, alkylaryl, arylalkyl, and aryl groups with at least 8 carbon atoms, preferentially 10 to 24 carbon atoms, and very preferentially from 16 to 20 carbon atoms each with two branches having at least six carbon atoms, or mixtures of these radicals, R' being extremely preferentially chosen from among 2-hexyl 1-decanyl and 2-octyl 1-dodecanyl or mixtures thereof.

7. Use, according to one of the claims 1 to 6, **characterized in that** said water-soluble copolymer is obtained by radical polymerization methods in a solution, in a direct or inverse emulsion, in a suspension or precipitation in solvents, in the presence of catalytic systems and transfer agents, or by controlled radical polymerization methods, and preferentially by nitroxide-mediated polymerization (NMP) or cobaloxyme-mediated polymerization, by atom transfer radical polymerization (ATRP), by sulfur-derivatives controlled radical polymerization, said sulfur derivatives being chosen from among carbamates, dithioesters, trithiocarbonates (RAFT), or xanthates.

8. Use, according to one of the claims 1 to 7, **characterized in that** said water-soluble copolymer, obtained in an acidic and potentially distilled form, may also be fully or partially neutralized by one or more neutralization agents having a monovalent or polyvalent function, chosen from the group made up of alkaline cations, and preferentially from among sodium, potassium, or ammonium, or chosen from among the group made up of primary, secondary, or tertiary aliphatic and/or cyclic amines, and preferentially from among stearylamine, ethanolamines (mono-, di-, and triethanolamine), mono- and diethylamine, cyclohexylamine, and methylcyclohexylamine; or chosen from the group made up of divalent alkaline-earth cations, and preferentially from among magnesia, calcium, and zinc; or chosen from the group made up by trivalent cations, and preferentially aluminium.

9. Use, according to one of the claims 1 to 8, **characterized in that** said water-soluble copolymer resulting from the copolymerization reaction is, before or after the total or partial neutralization, treated and separated into multiple phases, in accordance with static or dynamic methods, by one or more polar solvents preferentially belonging to the group made up of water, methanol, ethanol, propanol, isopropanol, butanols, acetone, tetrahydrofurane, or mixtures thereof.

10. Use, according to one of the claims 1 to 9, **characterized in that** it uses a quantity of said water-soluble copolymer between 0.1% and 3%, preferentially 0.2% to 1.5%, and very preferentially 0.3% to 1% by dry weight compared to the total weight of the mineral materials.

11. Use, according to one of the claims 1 to 10, **characterized in that** the aqueous dispersion and/or suspension of mineral materials contains at least 10%, preferentially at least 20%, very preferentially at least 50% and extremely preferentially at least 70% by dry weight of mineral materials, in relation to its total weight.

12. Use, according to one of claims 1 to 11, **characterized in that** said mineral materials are chosen from natural or synthetic calcium carbonate, dolomites, limestone, kaolin, talc, gypsum, lime, magnesia, titanium dioxide, satin white, aluminium trioxide or aluminium trihydroxide, silicas, mica and mixtures of these loads with one another, such as mixtures of talc-calcium carbonate, calcium carbonate-kaolin, or mixtures of calcium carbonate with aluminium trihydroxide or aluminium trioxide, or mixtures with synthetic or natural fibers, or co-structures of minerals such as talc-calcium carbonate or talc-titanium dioxide co-structures, or mixtures thereof, and **in that** said mineral materials are preferably chosen from natural or synthetic calcium carbonate or talc or mixtures thereof, and **in that** they are very preferably chosen from natural or synthetic calcium carbonate or mixtures thereof.

13. Sheets of paper, **characterized in that** they contain mineral materials, and at least one water soluble copolymer made up of, expressed as a percentage by weight of each of the components:
a) 5% to 95%, preferentially 50% to 95%, and very preferentially 70% to 95% of at least one anionic monomer which is an ethylenically-unsaturated anionic monomer in an acid or salt form, chosen from among ethylenically-unsaturated anionic monomers with a monocarboxylic function in their acid or salt form, and preferentially from among acrylic, methacrylic, crotonic, isocrotonic, or cinnamic acid, or diacid hemiesters such as C₁-C₄ monoesters of maleic or itaconic acids; or chosen from among ethylenically-unsaturated monomers with a dicarboxylic function in their acid or salt form, and preferentially from among itaconic, maleic, fumaric, mesaconic, or citraconic acid, or carboxylic acid anhydrides, such as maleic anhydride; or chosen from among ethylenically-unsaturated monomers with a sulfonic function in their acid or salt form, and preferentially from among acrylamido-2-methyl-2-propane-sulfonic acid, sodium methallylsulfonate, sulfonic vinyl acid, and sulfonic styrene acid; or chosen from among ethylenically-unsaturated monomers with a phosphoric function in their acid or salt form, and preferentially from among phosphoric vinyl acid, ethylene glycol methacrylate phosphate, propylene glycol methacrylate phosphate, ethylene glycol acrylate phosphate, propylene glycol acrylate phosphate and their ethoxylates; or from among ethylenically-unsaturated monomers with a phosphonic function in their acid or salt form, and is preferentially phosphonic vinyl acid; or mixtures thereof,
b) 5% to 95%, preferentially 5% to 50%, and very preferentially 5% to 30% of at least one ethylenically-unsaturated oxyalkylated monomer terminated by a hydrophobic chain, whose general formula (I) is: 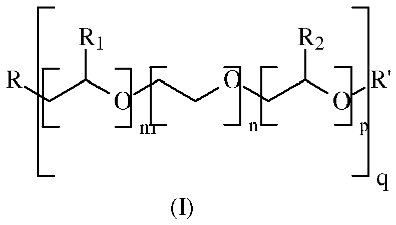 wherein:
- m and p represent a number of alkylene oxide units less than or equal to 100, n represents a number of ethylene oxide units less than or equal to 100, and q is a number at least equal to 1, with 0 ≤ q(n+m+p) ≤ 100,
- R₁ represents hydrogen or the methyl or ethyl radical,
- R₂ represents hydrogen or the methyl or ethyl radical,
- R represents the polymerizable unsaturated radical belonging to the group of acrylic, methacrylic, maleic, itaconic, crotonic, and vinylphtalic esters, as well as unsaturated urethanes such as, for example, acrylurethanes, methacrylurethanes, α-α' dimethyl-m-isopropenyl- benzylurethannes, and allylurethane,
- R' represents a hydrophobic radical which is a branched alkyl, alkylaryl, arylalkyl, or aryl group with 16 to 20 carbon atoms each with two branches having at least six carbon atoms, and **in that** the radical R' is extremely preferentially chosen from among 2-hexyl 1-decanyl and 2-octyl 1-dodecanyl or mixtures thereof.

14. Sheets of paper according to claim 13, **characterized in that** said mineral materials are chosen from natural or synthetic calcium carbonate, dolomites, limestone, kaolin, talc, gypsum, lime, magnesia, titanium dioxide, satin white, aluminium trioxide or aluminium trihydroxide, silicas, mica and mixtures of these loads with one another, such as mixtures of talc-calcium carbonate, calcium carbonate-kaolin, or mixtures of calcium carbonate with aluminium trihydroxide or aluminium trioxide, or mixtures with synthetic or natural fibers, or co-structures of minerals such as talc-calcium carbonate or talc-titanium dioxide co-structures, or mixtures thereof, and **in that** said mineral materials are preferably chosen from natural or synthetic calcium carbonate or talc or mixtures thereof, and **in that** they are very preferably chosen from natural or synthetic calcium carbonate or mixtures thereof.

## Patentansprüche

1. Verwendung einer Dispersion und/oder einer wässrigen Suspension von mineralischen Stoffen, in einem Verfahren zur Herstellung eines Papierblatts, als Mittel, welches das Eindringen einer Streichfarbe ins Innere des Blatts verzögert, **dadurch gekennzeichnet, dass** sie mindestens ein wasserlösliches Copolymer mit den folgenden Bestandteilen enthält:
a) mindestens einem ethylenisch ungesättigten anionischen Monomer,
b) und mindestens einem alkoxylierten Monomer, das ethylenisch ungesättigt ist und mit einer hydrophoben Kette endet.

2. Verwendung nach Anspruch 1, **dadurch gekennzeichnet, dass** das wasserlösliche Copolymer während mindestens eines Schrittes zur Zerkleinerung und/oder Dispersion der mineralischen Stoffe in wässrigem Milieu eingesetzt wird.

3. Verwendung nach einem der Ansprüche 1 oder 2, **dadurch gekennzeichnet, dass** das wasserlösliche Copolymer aus folgendem besteht:
a) mindestens einem ethylenisch ungesättigten anionischen Monomer, wobei es sich um ein ethylenisch ungesättigtes anionisches Monomer handelt, das als Säure oder in versalztem Zustand vorliegt und aus den anionischen Monomeren ausgewählt ist, die ethylenisch ungesättigt sind und eine funktionelle Monocarbonsäuregruppe haben, die als Säure oder in versalztem Zustand vorliegt, und zwar vorzugsweise aus Acrylsäure, Methacrylsäure, Crotonsäure, Isocrotonsäure, Zimtsäure oder den Halbestern von Disäuren wie etwa C₁-C₄-Monoestern von Maleinsäure oder Itaconsäure, oder das aus den Monomeren ausgewählt ist, die ethylenisch ungesättigt sind und eine funktionelle Dicarbonsäuregruppe haben, die als Säure oder in versalztem Zustand vorliegt, und zwar vorzugsweise aus Itaconsäure, Maleinsäure, Fumarsäure, Mesaconsäure, Citraconsäure, oder auch den Carbonsäureanhydriden wie etwa Maleinsäureanhydrid, oder das aus den Monomeren ausgewählt ist, die ethylenisch ungesättigt sind und eine funktionelle Sulfonsäuregruppe haben, die als Säure oder in versalztem Zustand vorliegt, und zwar vorzugsweise aus Acrylamido-2-methyl-2-propansulfonsäure, Natriummethallylsulfonat, Vinylsulfonsäure und Styrolsulfonsäure, oder auch aus den Monomeren ausgewählt ist, die ethylenisch ungesättigt sind und eine funktionelle Phosphorsäuregruppe haben, die als Säure oder in versalztem Zustand vorliegt, und zwar vorzugsweise aus Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten, oder auch aus den Monomeren ausgewählt ist, die ethylenisch ungesättigt sind und eine funktionelle Phosphonsäuregruppe haben, die als Säure oder in versalztem Zustand vorliegt, wobei es sich vorzugsweise um Vinylphosphonsäure handelt, oder deren Mischungen,
b) und mindestens einem alkoxylierten Monomer, das ethylenisch ungesättigt ist und mit einer hydrophoben Kette endet, wobei es der folgenden allgemeinen Formel (I) entspricht: 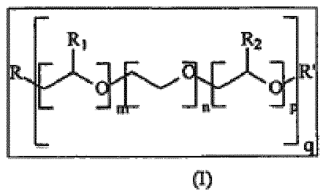 wobei:
- m und p für eine Anzahl von Alkylenoxideinheiten stehen, die höchstens 100 beträgt, n für eine Anzahl von Ethylenoxideinheiten steht, die höchstens 100 beträgt, und q für eine Anzahl, die mindestens gleich 1 ist, wobei 0 ≤ s q(n+m+p) ≤ 100
- R₁ für Wasserstoff oder einen Methyl- oder Ethylrest steht,
- R₂ für Wasserstoff oder einen Methyl- oder Ethylrest steht,
- R für den polymerisierbaren ungesättigten Rest steht, der zur Gruppe der Acrylsäure-, Methacrylsäure-, Maleinsäure-, Itaconsäure-, Crotonsäure-, Vinylphthalsäurester sowie der ungesättigten Urethane wie etwa der Verbindungen Acrylurethan, Methacrylurethan, α-α'-Dimethyl-m-isopropenylbenzylurethan, Allylurethan gehört,
- R' für einen hydrophoben Rest steht.

4. Verwendung nach einem der Ansprüche 1 bis 3, **dadurch gekennzeichnet, dass** der Rest R' aus dem Tristyrylphenylrest oder aus den Dialkylaminen mit mindestens 8 Kohlenstoffatomen, oder aus den geradkettigen oder verzweigten Alkyl-, Alkylaryl-, Arylalkyl-, Arylgruppen ausgewählt ist, die mindestens 8 Kohlenstoffatomen und vorzugsweise 10 bis 24 Kohlenstoffatome, mit starkem Vorzug 16 bis 20 Kohlenstoffatome haben, wobei sie 2 Verzweigungen mit mindestens 6 Kohlenstoffatomen besitzen, oder den Mischungen dieser Reste, und dadurch, dass der Rest R' mit äußerstem Vorzug aus 2-Hexyl-1-decanyl und 2-Octyl-1-dodecanyl und deren Mischungen ausgewählt ist.

5. Verwendung nach einem der Ansprüche 1 bis 4, **dadurch gekennzeichnet, dass** das Copolymer, neben mindestens einem Monomer a) und mindestens einem Monomer b), noch mindestens ein weiteres Monomer enthält, das aus einem Monomer des Typs Acrylamid oder Methacrylamid oder deren Derivaten wie etwa N-[3-(Dimethylamino)propyl] acrylamid oder N-[3-(Dimethylamino)propyl]methacrylamid und deren Mischungen ausgewählt ist, oder auch aus einem wasserunlöslichen Monomer wie etwa den Alkylacrylaten oder -methacrylaten, den ungesättigten Estern wie etwa N-[2-(Dimethylamino)ethyl]methacrylat oder N-[2-(Dimethylamino)ethyl]methacrylat, den Vinylverbindungen wie etwa Vinylacetat, Vinylpyyrolidon, Styrol, alpha-Methylstyrol und deren Derivaten, oder auch aus einem kationischen Monomer oder quartären Ammonium wie etwa vorzugsweise dem Chlorid oder Sulfat von [2-(Methacryloyloxy)ethyl]trimethylammonium, dem Chlorid oder Sulfat von [2-(Acryloyloxy)ethyl]trimethylammonium, dem Chlorid oder Sulfat von [3-(Acrylamido)propyl]trimethylammonium, dem Chlorid oder Sulfat von Dimethyldiallylammonium, dem Chlorid oder Sulfat von [3-(Methacrylamido)propyl]trimethylammonium, oder auch aus einem Organofluor- oder Organosilylmonomer, oder auch aus den vernetzungsfähigen Monomeren mit mindestens zwei ethylenisch ungesättigten Stellen, oder auch den Mischungen dieser Monomere.

6. Verwendung nach Anspruch 1 bis 5, **dadurch gekennzeichnet, dass** das Copolymer, ausgedrückt nach dem Gewicht seiner einzelnen Bestandteile, aus folgendem besteht:
a) 5 % bis 95 %, vorzugsweise 50 % bis 95 %, mit starkem Vorzug 70 % bis 95 % an mindestens einem ethylenisch ungesättigten anionischen Monomer, wobei es sich um ein ethylenisch ungesättigtes anionisches Monomer handelt, das als Säure oder in versalztem Zustand vorliegt und aus den anionischen Monomeren ausgewählt ist, die ethylenisch ungesättigt sind und eine funktionelle Monocarbonsäuregruppe haben, die als Säure oder in versalztem Zustand vorliegt, und zwar vorzugsweise aus Acrylsäure, Methacrylsäure, Crotonsäure, Isocrotonsäure, Zimtsäure oder den Halbestern von Disäuren wie etwa C₁-C₄-Monoestern von Maleinsäure oder Itaconsäure, oder das aus den Monomeren ausgewählt ist, die ethylenisch ungesättigt sind und eine funktionelle Dicarbonsäuregruppe haben, die als Säure oder in versalztem Zustand vorliegt, und zwar vorzugsweise aus Itaconsäure, Maleinsäure, Fumarsäure, Mesaconsäure, Citraconsäure, oder auch den Carbonsäureanhydriden wie etwa Maleinsäureanhydrid, oder das aus den Monomeren ausgewählt ist, die ethylenisch ungesättigt sind und eine funktionelle Sulfonsäuregruppe haben, die als Säure oder in versalztem Zustand vorliegt, und zwar vorzugsweise aus Acrylamido-2-methyl-2-propansulfonsäure, Natriummethallylsulfonat, Vinylsulfonsäure und Styrolsulfonsäure, oder auch aus den Monomeren ausgewählt ist, die ethylenisch ungesättigt sind und eine funktionelle Phosphorsäuregruppe haben, die als Säure oder in versalztem Zustand vorliegt, und zwar vorzugsweise aus Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten, oder auch aus den Monomeren ausgewählt ist, die ethylenisch ungesättigt sind und eine funktionelle Phosphonsäuregruppe haben, die als Säure oder in versalztem Zustand vorliegt, wobei es sich vorzugsweise um Vinylphosphonsäure handelt, oder deren Mischungen,
b) 5 % bis 95 %, vorzugsweise 5 % bis 50 %, mit starkem Vorzug 5 % bis 30 % an mindestens einem alkoxylierten Monomer, das ethylenisch ungesättigt ist und mit einer hydrophoben Kette endet, wobei es der folgenden allgemeinen Formel (I) entspricht: 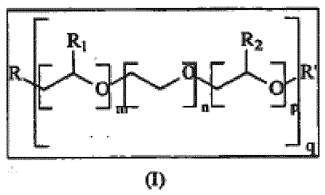 wobei:
- m und p für eine Anzahl von Alkylenoxideinheiten stehen, die höchstens 100 beträgt, n für eine Anzahl von Ethylenoxideinheiten steht, die höchstens 100 beträgt, und q für eine Anzahl, die mindestens gleich 1 ist, wobei 0 ≤ q(n+m+p) ≤ 100,
- R₁ für Wasserstoff oder einen Methyl- oder Ethylrest steht,
- R₂ für Wasserstoff oder einen Methyl- oder Ethylrest steht,
- R für den polymerisierbaren ungesättigten Rest steht, der zur Gruppe der Acrylsäure-, Methacrylsäure-, Maleinsäure-, Itaconsäure-, Crotonsäure-, Vinylphthalsäurester sowie der ungesättigten Urethane wie beispielsweise Acrylurethan, Methacrylurethan, α-α'-Dimethyl-m-isopropenylbenzylurethan, Allylurethan gehört,
- R' für einen hydrophoben Rest steht, der aus dem Tristyrylphenylrest oder aus den Dialkylaminen mit mindestens 8 Kohlenstoffatomen, oder aus den geradkettigen oder verzweigten Alkyl-, Alkylaryl-, Arylalkyl-, Arylgruppen ausgewählt ist, die mindestens 8 Kohlenstoffatomen und vorzugsweise 10 bis 24 Kohlenstoffatome, mit starkem Vorzug 16 bis 20 Kohlenstoffatome haben, wobei sie 2 Verzweigungen mit mindestens 6 Kohlenstoffatomen besitzen, oder aus den Mischungen dieser Reste, wobei R' mit äußerstem Vorzug aus 2-Hexyl-1-decanyl und 2-Octyl-1-dodecanyl und deren Mischungen ausgewählt ist.

7. Verwendung nach einem der Ansprüche 1 bis 6, **dadurch gekennzeichnet, dass** wasserlösliche Copolymer durch Verfahren der radikalischen Polymerisation in Lösung, in direkter oder umgekehrter Emulsion, in Suspension oder mit Fällungsvorgang in Lösungsmitteln, in Gegenwert von katalytischen Systemen und Kettenübertragungsmitteln erhalten wird, oder auch durch Verfahren der kontrollierten radikalischen Polymerisation und vorzugsweise durch eine Polymerisation, welche mittels Nitroxiden (NMP) oder mittels Cobaloximen kontrolliert wird, durch eine radikalische Polymerisation unter Atomtransfer (ATRP), durch eine radikalische Polymerisation, welche mittels schwefelhaltiger Verbindungen, die aus den Carbamaten, den Dithioestern oder den Trithiocarbonaten (RAFT) oder den Xanthogenaten ausgewählt sind, kontrolliert wird.

8. Verwendung nach einem der Ansprüche 1 bis 7, **dadurch gekennzeichnet, dass** das wasserlösliche Copolymer, welches als Säure erhalten und möglicherweise destilliert wird, weiterhin teilweise oder vollständig mit einem oder mehreren Neutralisierungsmitteln neutralisiert wird, die über eine einwertige oder mehrwertige funktionelle Gruppe verfügen, wobei sie aus der Gruppe ausgewählt sind, welche aus den Alkalikationen und vorzugsweise aus Natrium, Kalium, Ammonium besteht, oder aus der Gruppe ausgewählt sind, welche aus den aliphatischen und/oder zyklischen primären, sekundären oder tertiären Aminen und vorzugsweise aus Stearylamin, den Ethanolaminen (Mono-, Di-, Triethanolamin), Mono- und Diethylamin, Cyclohexylamin, Methylcyclohexylamin besteht, oder aus der Gruppe ausgewählt sind, welche aus den zweiwertigen Erdalkalikationen und vorzugsweise aus Magnesium, Calcium, Zink besteht, oder aus der Gruppe ausgewählt sind, die aus den dreiwertigen Kationen besteht, wobei es sich vorzugsweise um Aluminium handelt.

9. Verwendung nach einem der Ansprüche 1 bis 8, **dadurch gekennzeichnet, dass** das wasserlösliche Copolymer, welches aus der Copolymerisationsreaktion stammt, vor oder nach der vollständigen oder teilweisen Neutralisierungsreaktion behandelt und in mehrere Phasen aufgetrennt wird, und zwar gemäß statischen oder dynamischen Verfahren mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht.

10. Verwendung nach einem der Ansprüche 1 bis 9, **dadurch gekennzeichnet, dass** dabei eine Menge des wasserlöslichen Copolymers eingesetzt wird, die im Bereich von 0,1 % bis 3 %, vorzugsweise von 0,2 % bis 1,5 %, mit starkem Vorzug von 0,3 % bis 1 % nach Trockenmasse liegt, bezogen auf die Gesamttrockenmasse an mineralischen Stoffen.

11. Verwendung nach einem der Ansprüche 1 bis 10, **dadurch gekennzeichnet, dass** die Suspension und/oder wässrige Dispersion von mineralischen Stoffen mindestens 10 %, vorzugsweise mindestens 20 %, mit starkem Vorzug mindestens 50 % und mit äußerstem Vorzug mindestens 70 % nach Trockenmasse an mineralischen Stoffen enthält, bezogen auf ihre Gesamtmasse.

12. Verwendung nach einem der Ansprüche 1 bis 11, **dadurch gekennzeichnet, dass** die mineralischen Stoffe aus natürlichem oder synthetischem Calciumcarbonat, Dolomitstoffen, Kalk, Kaolin, Talk, Gips, Kreide, Magnesia, Titandioxid, Satinweiß, Aluminiumtrioxid oder auch Aluminiumtrihydroxid, den Siliciumdioxiden, Glimmer und Mischungen dieser Füllstoffe miteinander, wie etwa den Mischungen Talk-Calciumcarbonat, Calciumcarbonat-Kaolin, oder auch den Mischungen von Calciumcarbonat mit Aluminiumtrihydroxid oder Aluminiumtrioxid, oder auch den Mischungen mit synthetischen oder natürlichen Fasern oder auch den mineralischen Doppelstrukturen wie den Talk-Calciumcarbonat- oder Talk-Titandioxid-Doppelstrukturen oder deren Mischungen ausgewählt sind, und dadurch, dass die mineralischen Stoffe vorzugsweise aus natürlichem oder synthetischem Calciumcarbonat oder Talk oder deren Mischungen ausgewählt sind, und dadurch, dass sie mit starkem Vorzug aus natürlichem oder synthetischem Calciumcarbonat oder deren Mischungen ausgewählt sind.

13. Papierblätter, **dadurch gekennzeichnet, dass** sie mineralische Stoffe enthalten sowie mindestens ein wasserlösliches Copolymer, wobei dieses, ausgedrückt in Gewichtsprozent der einzelnen Bestandteile, aus folgendem besteht:
a) 5 % bis 95 %, vorzugsweise 50 % bis 95 %, mit starkem Vorzug 70 % bis 95 % von mindestens einem ethylenisch ungesättigten anionischen Monomer, wobei es sich um ein ethylenisch ungesättigtes anionisches Monomer handelt, das als Säure oder in versalztem Zustand vorliegt und aus den anionischen Monomeren ausgewählt ist, die ethylenisch ungesättigt sind und eine funktionelle Monocarbonsäuregruppe haben, die als Säure oder in versalztem Zustand vorliegt, und zwar vorzugsweise aus Acrylsäure, Methacrylsäure, Crotonsäure, Isocrotonsäure, Zimtsäure oder den Halbestern von Disäuren wie etwa C₁-C₄-Monoestern von Maleinsäure oder Itaconsäure, oder das aus den Monomeren ausgewählt ist, die ethylenisch ungesättigt sind und eine funktionelle Dicarbonsäuregruppe haben, die als Säure oder in versalztem Zustand vorliegt, und zwar vorzugsweise aus Itaconsäure, Maleinsäure, Fumarsäure, Mesaconsäure, Citraconsäure, oder auch den Carbonsäureanhydriden wie etwa Maleinsäureanhydrid, oder das aus den Monomeren ausgewählt ist, die ethylenisch ungesättigt sind und eine funktionelle Sulfonsäuregruppe haben, die als Säure oder in versalztem Zustand vorliegt, und zwar vorzugsweise aus Acrylamido-2-methyl-2-propansulfonsäure, Natriummethallylsulfonat, Vinylsulfonsäure und Styrolsulfonsäure, oder auch aus den Monomeren ausgewählt ist, die ethylenisch ungesättigt sind und eine funktionelle Phosphorsäuregruppe haben, die als Säure oder in versalztem Zustand vorliegt, und zwar vorzugsweise aus Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten, oder auch aus den Monomeren ausgewählt ist, die ethylenisch ungesättigt sind und eine funktionelle Phosphonsäuregruppe haben, die als Säure oder in versalztem Zustand vorliegt, wobei es sich vorzugsweise um Vinylphosphonsäure handelt, oder deren Mischungen,
b) 5 % bis 95 %, vorzugsweise 5 % bis 50 %, mit starkem Vorzug 5 % bis 30 % an mindestens einem alkoxylierten Monomer, das ethylenisch ungesättigt ist und mit einer hydrophoben Kette endet, wobei es der folgenden allgemeinen Formel (I) entspricht: 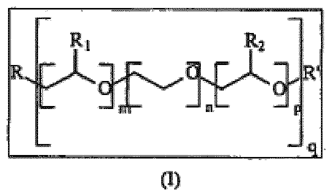 wobei:
- m und p für eine Anzahl von Alkylenoxideinheiten stehen, die höchstens 100 beträgt, n für eine Anzahl von Ethylenoxideinheiten steht, die höchstens 100 beträgt, und q für eine Anzahl, die mindestens gleich 1 ist, wobei 0 ≤ q(n+m+p) ≤ 100,
- R₁ für Wasserstoff oder einen Methyl- oder Ethylrest steht,
- R₂ für Wasserstoff oder einen Methyl- oder Ethylrest steht,
- R für den polymerisierbaren ungesättigten Rest steht, der zur Gruppe der Acrylsäure-, Methacrylsäure-, Maleinsäure-, Itaconsäure-, Crotonsäure-, Vinylphthalsäurester sowie der ungesättigten Urethane wie beispielsweise Acrylurethan, Methacrylurethan, α-α'-Dimethyl-m-isopropenylbenzylurethan, Allylurethan gehört,
- R' für einen hydrophoben Rest steht, bei dem es sich um eine verzweigte Alkyl-, Alkylaryl-, Arylalkyl-, Arylgruppe handelt, die 16 bis 20 Kohlenstoffatome hat, wobei sie 2 Verzweigungen mit mindestens 6 Kohlenstoffatomen besitzt, und dadurch, dass R' mit äußerstem Vorzug aus 2-Hexyl-1-decanyl und 2-Octyl-1-dodecanyl und deren Mischungen ausgewählt ist.

14. Papierblätter nach Anspruch 13, **dadurch gekennzeichnet, dass** die mineralischen Stoffe aus natürlichem oder synthetischem Calciumcarbonat, Dolomitstoffen, Kalk, Kaolin, Talk, Gips, Kreide, Magnesia, Titandioxid, Satinweiß, Aluminiumtrioxid oder auch Aluminiumtrihydroxid, den Siliciumdioxiden, Glimmer und Mischungen dieser Füllstoffe miteinander, wie etwa den Mischungen Talk-Calciumcarbonat, Calciumcarbonat-Kaolin, oder auch den Mischungen von Calciumcarbonat mit Aluminiumtrihydroxid oder Aluminiumtrioxid, oder auch den Mischungen mit synthetischen oder natürlichen Fasern oder auch den mineralischen Doppelstrukturen wie den Talk-Calciumcarbonat- oder Talk-Titandioxid-Doppelstrukturen oder deren Mischungen ausgewählt sind, und dadurch, dass die mineralischen Stoffe vorzugsweise aus natürlichem oder synthetischem Calciumcarbonat oder Talk oder deren Mischungen ausgewählt sind, und dadurch, dass sie mit starkem Vorzug aus natürlichem oder synthetischem Calciumcarbonat oder deren Mischungen ausgewählt sind.
